# EUROPEAN PATENT SPECIFICATION

(11) **EP 2 103 053 B1**
(45) Date of publication and mention of the grant of the patent: **25.08.2010**
(21) Application number: 07849374.9
(22) Date of filing: 07.12.2007
(51) Int. Cl.: H04L 12/56

(54) **ENHANCED DATA TRANSPORT PROTOCOL FOR A MULTI-STATION NETWORK**
ERWEITERTES DATENTRANSPORTPROTOKOLL FÜR EIN MEHRSTATIONS-NETZ
PROTOCOLE AMÉLIORÉ DE TRANSPORT DE DONNÉES POUR UN RÉSEAU À STATIONS MULTIPLES

(30) Priority: 08.12.2006 US 873757 P
(43) Date of publication of application: 23.09.2009
(73) Proprietor: Iwics Inc., Bothell, WA 98011 (US)
(72) Inventor: LARSEN, James David, Woodinville, Washington 98072-8370 (US)
(74) Representative: Tomlinson, Kerry John
(86) International application number: PCT/IB2007/054966
(87) International publication number: WO 2008/068729

(56) References cited:
- WO-A-2006/043161
- WO-A-2006/123218
- US-A1- 2005 135 242

## Description

This invention relates to a method of operating a multi-station communication network, and to a network as such, of the general kind described in International Patent applications nos. WO 96/19887 and WO 98/56140.

A network of the kind referred to above is also described in WO 2005/062536, which relates in particular to a data transport protocol for use by such a network. Other networks of this Kind are described in WO 2005/0135242 and WO 2006/043161.

Networks of this kind can be utilized commercially, with users being subscribers who are billed for their use of the network. Alternatively, networks of this kind may be utilized by security forces such as police or military forces. A further application for networks of the kind referred to is in Wireless Local Area Networks (WLANs), where a wireless network can be combined with conventional network structures to service fixed and mobile network users. Such networks are usually but not necessarily computer networks.

In WO 2005/062536, a data transport protocol is described which combines the use of neighbor gathering probe signals, for purposes of acquiring and maintaining an optimum group of neighbors around each station in the network, with the use of specialized data transport signals having RTS and CTS functionality specific to, and enabling efficient communication in, a network utilizing opportunistic (ODMA) relaying techniques.

It is an object of the invention to provide further developments and enhancements of this functionality.

According to the invention there is provided a method of operating a communication network comprising a plurality of stations each able to transmit and receive data so that the network can transmit a message comprising a plurality of data packets from an originating station to a destination station via at least one opportunistically selected intermediate station, the method including:
selecting, at each station, one or more probing channels for the transmission of probe signals to other stations;
transmitting neighbor gathering probe signals from each station on the selected one or more probing channels, other neighboring stations which receive the neighbor gathering probe signals from a probing station responding directly, or indirectly via other stations, to thereby indicate to the probing station their availability as destination or intermediate stations;
transmitting on one or more of the selected probing channels, from a station with data to send, to other neighboring stations that have indicated to the probing station their availability as destination or intermediate stations, a data transport signal comprising a Request to Send message indicating the need to send data to a particular destination station or stations and specifying instructions and/or criteria for use by one or more neighboring stations receiving the Request to Send message;
transmitting, from one or more neighboring stations that have indicated to the probing station their availability as destination or intermediate stations and that receive the Request to Send message, to the station with data to send, a data transport signal comprising a first response message including general information that includes connectivity information relating to the quality of connectivity between stations and indicates said neighboring station's availability as a destination or intermediate station and supplementary information in response to the instructions and/or criteria specified by the station with data to send; and
selecting opportunistically, at the station with data to send, one or more neighboring stations that transmitted a first response message as recipients of data and/or instructions based on the general information and, where applicable, on the supplementary information in their first response messages, and transmitting at least one data packet to said one or more selected neighboring stations or sending one or more additional instructions to said one or more selected neighboring stations and/or to other stations.

The first response message may be a Clear to Send message.

Alternatively, the first response message may be an Acknowledgement message or a Ready to Receive message, the method additionally including, after the step of the station with data to send transmitting the Request to Send message, transmitting, from said station with data to send, at least one data packet to the other neighboring stations that have indicated their availability as destination or intermediate stations.

The method may additionally include, subsequent to the station with data to send sending said data or instructions to said one or more selected neighboring stations, transmitting on one or more of the selected probing channels or on a data channel, from one or more neighboring stations that have received the data or instructions from the station with data to send, a data transport signal comprising a second response message to the station with data to send, the second response message including supplementary information, and wherein the supplementary information provided in each second response message may be used by the station with data to send in the selection of one or more selected stations to transmit further data or instructions to.

The second response messages may comprise an Acknowledgement message (ACK), or a Not Acknowledged message (NACK), or a Ready to Receive message (RTR), or a Clear to Send message (CTS), or a Request to Send (RTS) message.

The supplementary information may include cost to destination information for the specified destination station or stations, and/or resource information of the station sending the ' data transport signal or of any other neighboring stations, and/or supplementary cost function information comprising data from at least one of a plurality of categories of supplementary cost functions.

The supplementary cost function information and resource information may comprise information in respect of one or more of the following categories of cost functions:
a) message/transmission priority;
b) message time to live;
c) amount of data to be transferred;
d) information relating to the availability and utilization of the resources of the station sending the Clear to Send message, including the buffer size (indicating the extent to which messages are retained or queued and waiting to be sent, etc), the time duration relating to how long data has already been held in the buffer, potential limits of buffer in respect of size, capacity and ability to transmit data to reduce the buffer, data rates used and/or potentially available through the station etc;
e) channels available and/or any channels prohibited;
f) path characteristics, including path loss, multi-path distortion such as phase and frequency distortion, bit error rates, packet failure rates, success rates/numbers of packets received, success rates in receiving and sending messages (RTS/CTS ratios, transmit to ACK ratios), interference conditions including background noise and noise floor, etc on different channels (which interference conditions can be categorized, such as man-made, natural, source type, intermittent, continuous, etc);
g) battery usage and capacity at the station transmitting the Clear to Send message;
h) duty cycle of the station transmitting the Clear to Send message;
i) average delays in messages getting to any destinations;
j) ping round trip delays to different destinations and neighbors;
k) information enabling the assessment of the aggregate quality of connectivity available (for example, "good" connectivity to 10 stations, or "average/poor" connectivity to 20 stations is better than 1 "excellent" link, that has the potential for catastrophic failure; more stations in parallel are usually better than having one in series (being similar conceptually to higher resistance resistors placed in parallel rather than series in electrical circuits - 1/R=1/r1 +1/r2 ...));
l) neighboring station information relative to the station sending the Clear to Send message, including the number of neighbors available and the quality of the neighbors (close, lonely or merely available), availability and utilization of the resources of these neighbors, data rates being used and/or potentially available through them, etc;
m) the condition of the connectivity with the neighbors of the neighbors of the station sending the Clear to Send message, and the next levels of neighbors beyond, as well as the resources used or available at these stations (thereby providing information to the station with data to send of the immediate conditions and resources applicable two and three hops away from the station with data to send).

One or more Request to Send messages may be sent simultaneously or sequentially and may specify additional instructions and/or define specified criteria to be provided in the Clear to Send messages transmitted by responding stations, or may define specified criteria required for Clear to Send messages to be transmitted.

The Request to Send messages may also include instructions for other neighboring stations that do not meet the criteria specified in the Request to Send message.

The data transport signals may include additional instructions and/or define criteria for use by neighboring stations of a station receiving said data transport signals.

Alternatively, the Request to Send message(s) may include general information and/or supplementary information about the station with data to send and/or about its neighboring stations, wherein the stations transmitting a Clear to Send message may specify additional instructions and/or define specified criteria for use by the station with data to send and/or by neighboring stations of the station with data to send and/or the station transmitting the Clear to Send message.

The stations transmitting the Clear to Send messages may send one or more messages simultaneously or sequentially. Similarly, subsequent first and/or second response messages sent by stations may specify additional instructions and/or define specified criteria for use by the station with data to send and/or by neighboring stations of the station with data to send.

The additional instructions in the RTS, CTS, instruction messages and first and/or second response messages may include one or more of the following parameters that can be adapted/switched:
- Time (when to send);
- Channels;
- Modulation type;
- Code (even on same channel), spreading code, forward error correction (FEC) etc;
- Data rates;
- Power level;
- Packets - packet types and different packet sizes can be used, and different error correction codes may be utilized (for example a very rugged error correction code could be incorporated to ensure information gets through a difficult channel);
- Antennas - the same channel can be used by one station but on different antennas - likewise a station receiving RTS can report on CTS that it can transmit and receive on one antenna or on more antennas simultaneously, and then receive information in respect of which sending/receiving antenna is better.

The method preferably includes applying a weighting or formula to different cost functions or categories of cost function, or criteria or resources allocated a cost function, selectively, depending on one or more characteristics of message data to be sent from the originating station to the destination station.

The method may include defining a plurality of different gradient types and generating cost to destination gradients from originating stations to destination stations comprising one or more of such different gradient types, and identifying certain characteristics of data packets, so that data packets of different sizes or characteristics can selectively follow different gradient types and thus different paths in the network from originating stations to destination stations.

The method may include selecting, at one or more stations, a plurality of different probing channels for the transmission of probe signals to other stations, transmitting neighbour gathering probe signals on the plurality of different probing channels, and acquiring respective groups of neighbor stations on one or more of the different probing channels.

In a situation where a plurality of stations are interconnected via an auxiliary communication link, such as a wired connection, the method may include one or more of the plurality of stations selecting at least one different probing channel for the transmission of probe signals to other stations, transmitting neighbour gathering probe signals on the at least one different probing channel and the one or more stations transmitting such neighbor gathering probe signals acquiring a group of neighbor stations on the respective different probing channels, thereby effectively to create a larger group of neighbor stations available to each of the interconnected stations.

Information in the Request to Send and/or Clear to Send messages may be used to determine peaks of opportunity in connectivity for use in opportunistically selecting said one or more neighboring stations as recipients of data and/or instructions.

Alternatively, or in addition, information in the Request to Send and/or Clear to Send messages may be used to determine troughs of interference in connectivity for use in opportunistically selecting said one or more neighboring stations as recipients of data and/or instructions.

Further according to the invention there is provided a communication network comprising a plurality of stations each able to transmit and receive data so that the network can transmit a message comprising a plurality of data packets from an originating station to a destination station via at least one opportunistically selected intermediate station, the network being operable to:
select, at each station, one or more probing channels for the transmission of probe signals to other stations;
transmit neighbor gathering probe signals from each station on the selected one or more probing channels, other neighboring stations which receive the neighbor gathering probe signals from a probing station responding directly, or indirectly via other stations, to thereby indicate to the probing station their availability as destination or intermediate stations;
transmit on one or more of the selected probing channels, from a station with data to send, to other neighboring stations that have indicated to the probing station their availability as destination or intermediate stations, a data transport signal comprising a Request to Send message indicating the need to send data to a particular destination station or stations and specifying instructions and/or criteria for use by one or more neighboring stations receiving the Request to Send message;
transmit, from one or more neighboring stations that have indicated to the probing station their availability as destination or intermediate stations and that receive the Request to Send message, to the station with data to send, a data transport signal comprising a first response message including general information that includes connectivity information relating to the quality of connectivity between stations and indicates said neighboring station's availability as a destination or intermediate station and supplementary information in response to the instructions and/or criteria specified by the station with data to send; and
select opportunistically, at the station with data to send, one or more neighboring stations that transmitted a first response message as recipients of data and/or instructions based on the general information and, where applicable, on the supplementary information in their first response messages, and transmit at least one data packet to said one or more selected neighboring stations or send one or more additional instructions to said one or more selected neighboring stations and/or to other stations.

Figure 1 is an overall system diagram showing an example of a WLAN network in which the method and system of the present invention can be utilized;
Figure 2 is a schematic diagram of the system level architecture of the network of Figure 1;
Figure 3 is a block schematic diagram showing the hardware architecture of a typical user station or client device for use in the network;
Figure 4 is a schematic connectivity diagram generally representing gradients between stations in the network;
Figure 5(a) is a schematic diagram similar to Figure 4, showing gradients between a source station and a destination station via specific intermediate stations;
Figure 5(b) is an alternative version of Figure 5(a) in which the general, averaged trends of the gradients are shown as continuous lines;
Figures 6(a) and 6(b) are similar diagrams to Figures 5(a) and 5(b) respectively, showing changed connectivity conditions;
Figure 7 is a schematic diagram showing routing options between source and destination stations;
Figure 8 is a plot of signal strength against distance as experienced by a moving wireless network station;
Figures 9(a) and 9(b) are similar diagrams to Figure 8 showing transmission opportunities available to a station with one and several neighbor stations, respectively;
Figure 10 is a schematic diagram illustrating the effect on throughput in the network due to increasing numbers of intermediate relay stations being interposed between source and destination stations;
Figure 11 is a schematic diagram showing connectivity and routing options available between a source and a destination station;
Figures 12(a) and 12(b) are schematic diagrams showing cells with larger and smaller numbers of user stations;
Figure 13 is a schematic diagram illustrating data flow between network stations according to one embodiment of the data transport protocol of the invention;
Figure 14 is a similar diagram to that of Figure 13, illustrating an alternative example;
Figure 15 is a similar diagram to that of Figures 13 and 14, illustrating a further alternative example in which stations have multiple radios;
Figures 16(a) and 16(b) are schematic diagrams illustrating the operation of RTS and CTS cycles between stations in relatively noisy conditions;
Figures 17 and 18 show simulations of transmission summaries of data transmitted over a particular exemplary terrain between stations in a network of the invention;
Figure 19 is a graphic representation of a portion of a network operating in accordance with the invention, projected on a globe; with the representation showing an up-link scenario of the network experiencing high interference and points of concentration;
Figure 20 is a similar representation to that of Figure 19, projected on a flat surface and showing a down-link scenario and;
Figures 21 and 22 are schematic diagrams illustrating examples of probing processes between multiple stations with access to multiple probing channels.

The present invention relates, broadly, to a method of operating a multi-station communication network of the kind described in International patent applications nos. WO 96/19887 and WO 98/56140, the contents of which are incorporated herein by reference. In brief, the basic operation of such a network is as follows.

The multi-station network comprises a number of independent stations, which may be fixed or mobile, each of which can transmit and receive data in order to transmit messages from originating stations to destination stations opportunistically via intermediate stations. In order for an originating station to be in a position to send a new message to a destination station via a selected one of several possible intermediate stations, each station will at any time normally be in contact with several other stations. This applies also to the case where stations are required to relay a message from an originating station to a destination station.

In order to do this, each station selects one of a number of possible probing channels to transmit probe signals to other stations. The probe signals contain data identifying the station in question and include details of its connectivity to other stations. Other stations receiving the probe signals respond directly to the probing station or indirectly, via intermediate stations, thereby indicating both to the probing station and other stations their availability as destination or intermediate stations. The probing station evaluates the direct or indirect responses to identify other stations with which it can communicate optimally.

In particular, the stations of the network may monitor the cumulative power required to reach another station, thereby defining a power gradient to the other stations, with stations selecting a route through the network between an originating station and a destination station which optimizes the power gradient. This enables data throughput through the network to be maximized, with minimum interference and contention between stations.

Each station in the network comprises a transceiver able to receive and transmit data from any other station within range. The network could be a packet radio network, as described in the above mentioned International patent applications, but it will be appreciated that the invention is applicable to other networks in which user stations can communicate with one another via intermediate stations in the network.

The above described method of opportunistic data transmission between stations of a network is referred to herein as Opportunity Driven Multiple Access (ODMA).

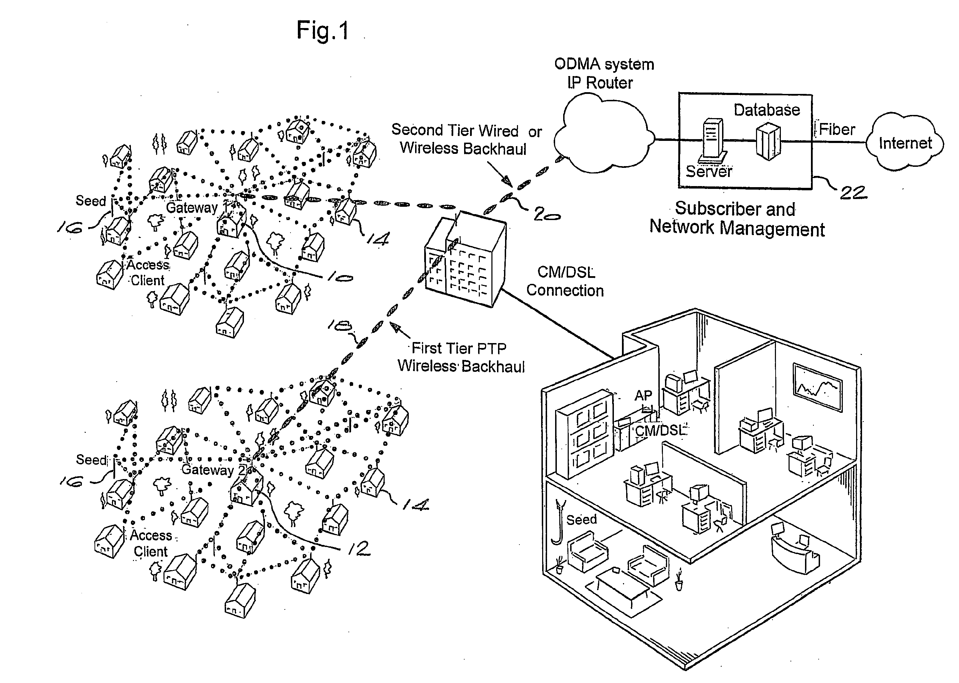

An embodiment of the present invention will now be described with reference to a WLAN system based on the 802.11 a/b/g standard. An example of such a WLAN arrangement, which is known as such, is illustrated in the schematic diagram of Figure 1.

In Figure 1, first and second gateways 10 and 12 each serve as an access point to the network for a number of subscriber units (client devices) 14, who are typically network users. The client devices in this embodiment will typically be wireless network cards which can communicate with the respective gateways 10 and 12 either directly, or indirectly via other client devices, using ODMA techniques. In addition, a number of seed stations 16, which are wireless routers, are deployed near the gateways 10 and 12. The seed stations effectively extend the coverage range and throughput of the network by extending the connectivity range of the client devices, particularly in difficult environments.

ODMA protocols can operate over wireless links to relay data opportunistically between subscriber units (client devices) and seeds, over wired networks such as local area networks, and the wireless backhaul or fiber links 18 and 20 shown in Figure 1. The relaying from station to station may involve wire and wireless hops and hops via wireless backhaul as shown.

The network opportunistically routes messages wirelessly from subscriber to subscriber and via seeds into gateways and then via point to point links into fiber, into another region.

In this way a national and international network using ODMA, via the various types of network, can allow messages to be passed from any user to any other user in any part of the world. The network will automatically find optimal paths for the message packets to follow and provide load balancing and healing of broken links by finding alternate paths through the network. All units in the ODMA network have unique addresses called SID (System ID).

A subscriber network manager 22 monitors the health of the various stations in the network and manages the security and billing of the network.

In the above described example, the client devices can communicate with the gateways 10 and 12, either directly, via the seed stations 16, or via one or more intermediate client devices, in the manner described in the abovementioned International patent applications. In addition, the client devices can form instant, peer-to-peer networks with other similar devices.

The use of opportunistic multi-hop routing in a network of this kind improves network robustness, as client devices can hop to alternate gateways if their current gateway fails, and tends to eliminate bottlenecks and improve overall network performance. In conventional 802.11 a/b/g systems, the range tends to be reduced drastically, typically to less than a hundred meters. In order to increase coverage to distant client devices the data rate must be reduced. In turn, the use of a low data rate causes client devices to stay on the data channel for longer, so that throughput suffers for all client devices of the WLAN. The use of opportunistic multi-hop routing solves this problem, since even distant client devices can, using multiple hops at the highest data rate through seed stations and neighboring client devices, transmit data to a destination, avoiding network congestion. The optimal use of channels and power adaptation reduces contention and optimizes the throughput offered to the users.

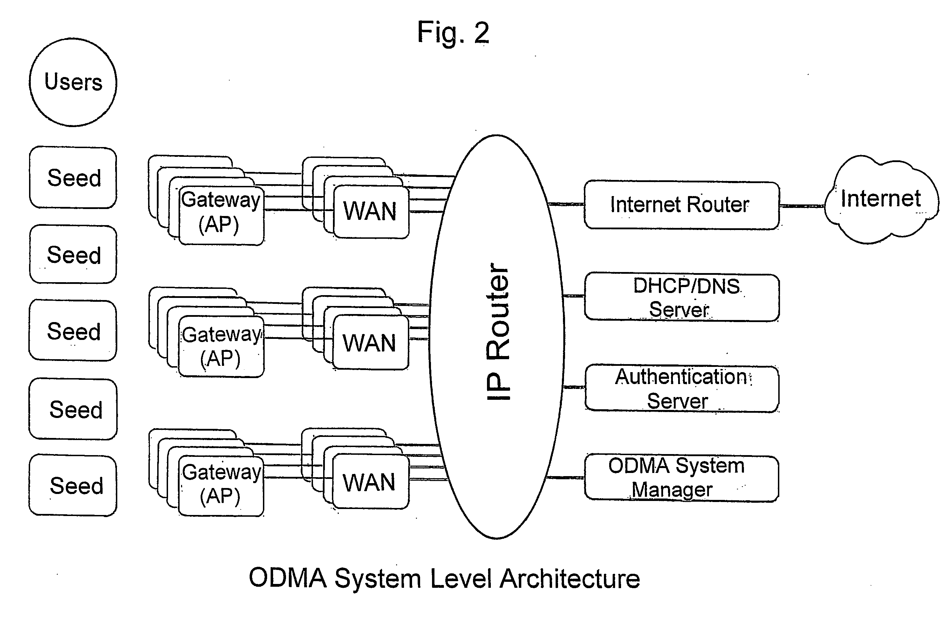

Figure 2 shows the system level architecture of the network of Figure 1. The system essentially comprises subscriber units or users (client devices), seed stations, and gateways that link the client devices to a WAN. The client devices can communicate with each other by relaying messages directly between themselves or via the seed stations. If a user wants to access other networks such as the Internet the messages are relayed to the WAN via a gateway and then a router network into the other networks. The gateways act as translators from the ODMA protocols used by the client devices and seed stations to other protocols such as TCP/IP.

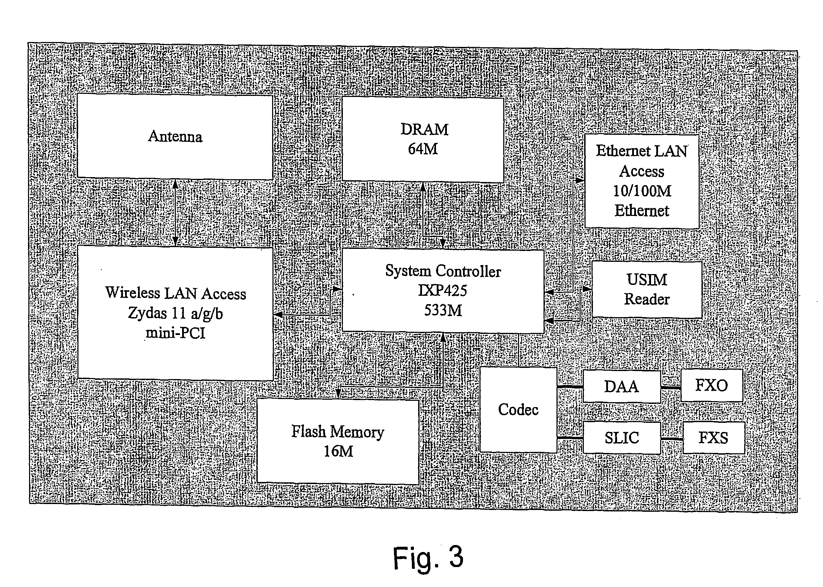

Figure 3 is a block schematic diagram that shows the hardware architecture of a typical user station or client device, incorporating both wireless data transfer and voice functionality, for use in the network.

In the abovementioned International patent application no. WO 2005/062536, the contents of which are incorporated herein by reference, reference is made to "cumulative costs" in the relation to the construction of gradients. Each station keeps a record of the (cumulative cost) gradients to each destination of each of its neighbors, as well as its own gradient to the destination. Each station only passes messages to stations with a lower cumulative cost to destination. Neighbor gathering via slow probing and gradient generation via fast probing allow a station to develop a number of choices of stations with lower cost to any destination that can send messages to such destinations. The neighbors are maintained continuously via slow probing, and gradients are only developed on a needs basis when messages need to be sent to stations that are not neighbors. In WO 2005/062528, the contents of which are also incorporated herein by reference, the determination and use of gradients is described in greater detail.

There are many and varied ways of setting up gradients. The publications referred to above typically focused on transmission power requirements to reach the next station. However, if the gradient is considered to be comprised of "cost functions", then it will be appreciated that the gradient can be constructed from numerous parameters and in various ways and combinations.

In general, the ODMA methodology attempts always to pass data on to stations with a lower cost to the destination than the station sending the data. In this manner, communications always flow "down hill". The gradients are set up to help the stations establish whether the next step is "down hill" and the gradients defined can be thought of in the same manner as a three-dimensional slope formed on a canvas, or in an eroded canyon, with the destination being "pulled down" on the canvas, or being a deep point in the canyon. On such a surface, like the beads of water on the canvas or rivers in the canyon, data packets flow down the slope formed, via multiple different potential paths.

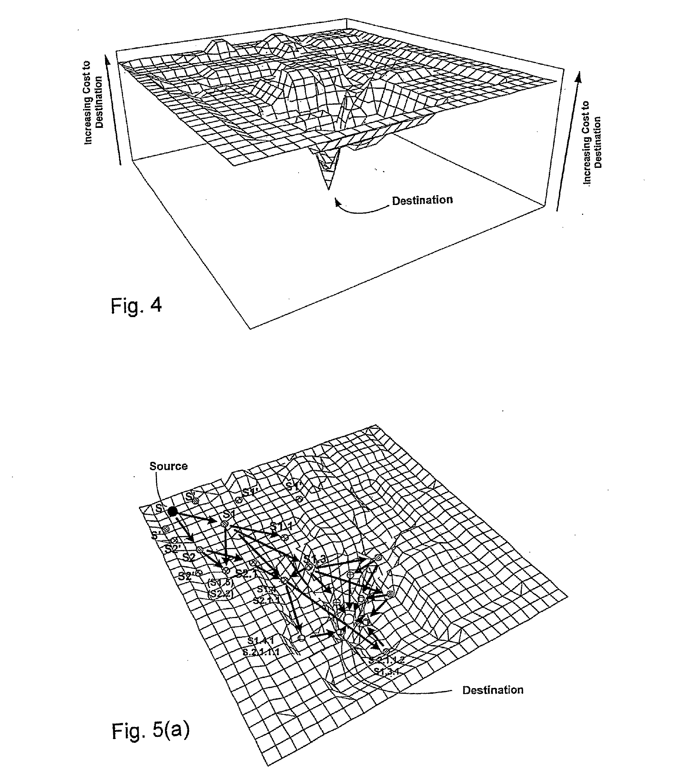

Figure 4 demonstrates this concept in diagrammatic form. It will be seen that any station located on the "surface" wishing to communicate with the destination will have a cost to destination defined by its position on the surface slope relative to the destination. Stations with better connectivity to the destination will have a lower delta (difference) in the cost relative to the destination. The shape of the surface is not static and the cumulative cost function slope, reflecting changes in the cost function between stations (the change also being referred to as the delta (Δ)) down the slope, is moving all the time as the surface environment changes (corresponding to changes such as changes in the connectivity between stations).

Any neighbor stations that are on the same level or higher on the slope, relative to the station sending the data at any point in time, will not typically be considered as potential relays; as this would not place the data in a better position relative to the destination. Specific exceptions do exist to this general rule which are described below in this specification.

In wireless radio communications, the actual connectivity conditions between stations are highly dynamic and can change very materially over short time intervals. If the connectivity conditions could be sampled in infinitely small time increments considerable fluctuation in the signal quality would be seen in the connectivity between stations. However, the gradients are constructed with larger sample timing increments through many stations, and as such represent "averaged" cost functions which vary less dramatically than the actual instantaneous conditions. In other words, the actual effect of the dynamic fluctuations, as witnessed, is damped to some extent but still provides information of great value.

Gradients are actually constructed in the following manner. A probe signal (a fast probe) is sent from a source station out to neighbors (which typically have been located through slow probing), which in turn fast probe their own neighbors, and so on, until the neighbor receiving the fast probe is the required destination station. The destination then responds by sending fast probes to its own neighbors, which in turn form gradients outwardly from the destination until the source is located (therefore gradients are defined both from the source to destination and from the destination back to the source). Information relating to the cost functions between the relaying links used is passed back by each station as the gradient is constructed (each station in the path automatically having a measure of the cumulative cost to the destination). The costs can be added at each step in the sequence to provide a running total, or the actual parameters can be compiled in a matrix for calculation by the station sending data. In fast probing, this process of gradient construction can be completed rapidly (in the order of 10-100 milliseconds), and as indicated the gradient defined will constantly be changing with time. The gradient provides direction from source to destination in the sense that any station in the route can determine whether the message is flowing closer to the destination.

To understand the effect of sampling the conditions over the relaying stations, consider an analogy of a number of vehicles traveling in a line on a road where each vehicle can only see the vehicle in front and the vehicle behind. However, each vehicle is able to measure the relative distance to the vehicle that can be seen in front of it. Assume also that each vehicle has visual means of communicating to the one ahead and the one behind, such as a text board placed at the front and rear. The first vehicle communicates on the rear board what is ahead, if anything, and provides the relative distance if applicable. The second vehicle records on both boards that there is one vehicle ahead and provides the relative distance to the vehicle, together with the information provided by the first vehicle.

Assuming each vehicle's board has provision for maintaining details in this manner of the ten cars ahead of it, the vehicles following in the line have an indication of which vehicles are ahead and of the distances to all the vehicles, even though these vehicles cannot actually be seen. If each vehicle actually monitors the distance to the vehicle ahead in real time and on an ongoing basis, but it takes one minute to make the information available on the board, it will be evident that a full minute (the sampling rate) will pass before the first vehicle sends new information to the second vehicle. If the second vehicle reacts immediately, it will be two full minutes before the third vehicle is aware of the information provided by the first vehicle; and any change in the distance between the first and second vehicles will be a minute old. Vehicle ten will only be aware of the changes relative to the first vehicle nine minutes after the fact - the propagation time for information to work back to it. Vehicle ten can add up all the distances (or a running total may be passed down the line) and it will have an indication of the distance to the first car and the relative distances en route - but this information is already out of date in relative terms.

If the vehicles' distances vary between 100m and 1,000m from one another (the road conditions change), but on average the vehicles are 550m apart, then on average the cumulative distance between the first and tenth vehicles is 4950m. Actual distances between neighboring vehicles may fluctuate by a factor of 10, but the cumulative distance is likely to be relatively stable. Obviously, in the above analogy the actual distances are a factor for determining the actual cost functions; and the cumulative distance is the cumulative cost function (or gradient). (In the radio environment, for example, the analogy could be mapped as follows: vehicles = stations, boards = messages, distance = path loss or other cost function, monitoring cumulative distance and passing it on = slow/fast probe etc.)

To complete the analogy, assume that a vehicle is placed at the side of the road monitoring vehicles going by. The parked vehicle would detect the gradient fluctuating slowly, and would have an indication of the distances between it and the ten cars ahead at any given time. If the vehicle was at an intersection, where there were several alternate roads available, the vehicle would have an indication of the conditions ahead for each route. If the distances are short, it might be assumed that the road is more congested, for example. Based on this information, the vehicle may choose to join one route rather than another at any particular moment.

Other parameters could of course be monitored or measured - for example the speeds of each vehicle, vehicle type, the road conditions etc. All of these parameters could influence the choice of path depending on the needs of the parked vehicle. For a vehicle with a heavy load, for example, a good road surface with fewer intersections and hills would be preferable, even if the speeds, congestion and weather conditions were poor; whereas a motor cycle may be more concerned with speed, congestion and good weather etc. Indeed, it would be possible to provide certain rules to optimize the efficiencies of the road network; for example, heavy vehicles may not permitted on dirt roads unless absolutely necessary, etc.

In the above analogy, it should be evident that by calculating the cumulative effect of the relevant parameters over several hops, because there are relatively large lag times in respect of each node sample, fast fluctuations in the relative values of the parameters measured are less important in the value derived. (In sampling theory generally, it is considered necessary to sample at more than twice the speed of the fluctuation in order to be in a position to monitor the variations meaningfully.) In addition, because many paths can be used in parallel, it is unlikely that the rate of change of cumulative information averaged over the parallel paths will change materially from the source to destination, even if any specific paths used fluctuate more substantially.

Accordingly, returning to the communication network of the present invention, gradients are essentially cost differentials between certain stations and are useful as a means of monitoring a highly dynamic environment in a more averaged or smoothed out way. The gradient generating probes are continuous for the duration of the time a station has data to send. The important feature to understand is that any station needing to send data will now have constantly updated knowledge of all the neighbor stations' likely costs to destination for the duration it needs to send a message. The responses received only indicate a "likely" cost to destination as this will in actuality change dynamically and the actual cost of a data packet subsequently sent will be dependent on the connectivity available at each hop in the transmission.

As such, routing is not deterministic from the original source station to the destination. The gradient at each node is used to assist in the determination of only the next hop and does not pre-determine the entire route. This enables an adaptive routing mechanism that is determined at each relaying node as the data is about to be relayed. Gradients provide an indication of the "direction" of lower cost to destination (although as detailed below in this specification, other methods can also indicate conditions ahead); the information is gathered dynamically, but is relatively slow changing.

Consequently, an RTS/CTS cycle is used to determine the exact fluctuations experienced between a sending station and a neighbor at the moment of transmission, and/or to determine other factors that may be of relevance in the relaying decisions taken.

Messages are broken into packets at the originating (source) station. A station with a packet to send broadcasts a Request to Send message (RTS). Neighboring stations that are not busy and are closer (gradient-wise) to the destination transmit back a Clear to Send message (CTS), and a Ready to Receive message (RTR) for multi-channel systems. The data packet is transmitted to one of those stations. When it is received, the receiving station may transmit a Packet Acknowledge message (ACK) back to the transmitting station. At the destination station, all packets are collected and re-assembled into the message. Once the entire message has been received, an End-to-End Acknowledge message (End-to-End ACK) may be transmitted back to the message originating station.

Various mechanisms are also used to counter pathological cases (e.g. message collisions, missing packets, timeouts, etc). All non-Data messages (RTS, CTS) are transmitted on the selected probing channel. Other Data packets, RTR and the data ACK are transmitted on other available "data" channels (if more than one channel is to be used). All transmissions in the comprehensive algorithm are effectively "broadcast" messages; i.e. any listening station can hear them and understand their content.

However, the stations chosen to receive a CTS are typically those neighbor stations that the station sending data determines have gradients that are suitable - namely they have a lower cumulative cost to the final destination compared to the sending station's cumulative cost to destination. In the canvas or canyon example, as the packets roll down the slope the surface could change and form a bump in the path at the moment the packet arrives at a particular point, deflecting the path slightly. The RTS and CTS mechanisms detect the bumps as any irregularities arise, and by anticipating these obstacles routing of the packets is directed via a more opportune route in real time. If gradients are defined in orders of time of approximately 100 milliseconds, the RTS/CTS cycles typically occur in the order of approximately 100 microseconds or less (generally the RTS/CTS cycles are two or three orders of magnitude smaller than the gradient generation). Indeed, the ratio of the RTS/CTS cycle duration relative to the time for the data to be sent should be very small so that the overhead of the cycle is low compared to that of the data transmission itself (typically being less than 10%).

From the gradient information the station will be able to monitor the fast probe responses and maintain a subset of neighbors that have cumulative costs to destination that are likely to be lower than its own, and from these it can also establish its own cumulative cost to destination through these neighbors by adding on the cost function to reach these neighbor stations. The "ranking" of the neighbors' costs to destination is not definitive - as this information is always going to be outdated to some extent as it is only as good as the latest probe. However, because the gradients are established from the cumulative cost functions, the sending stations have a good indication of the best stations to be considered as potential intermediaries. This provides the most probable best possible "choices" available. From these choices opportunities will be available that can be taken at the moment of actual data transmission on a packet by packet basis.

By way of example to illustrate the processes discussed above, Figure 5(a) shows a source station (S) needing to send data to a destination station. Station S has several immediate neighbors gathered through slow probing. S sends out an RTS to these neighbors, but of these neighbors only S1 and S2 have lower costs to destination (derived through fast probing) - as seen on the slope. Other neighbors (S') may have better connectivity with S itself, but as they have either the same or lower costs to destination in comparison to S they are not considered. Only S1 and S2 send a CTS, based upon which S may send some, all or no data through these neighbors.

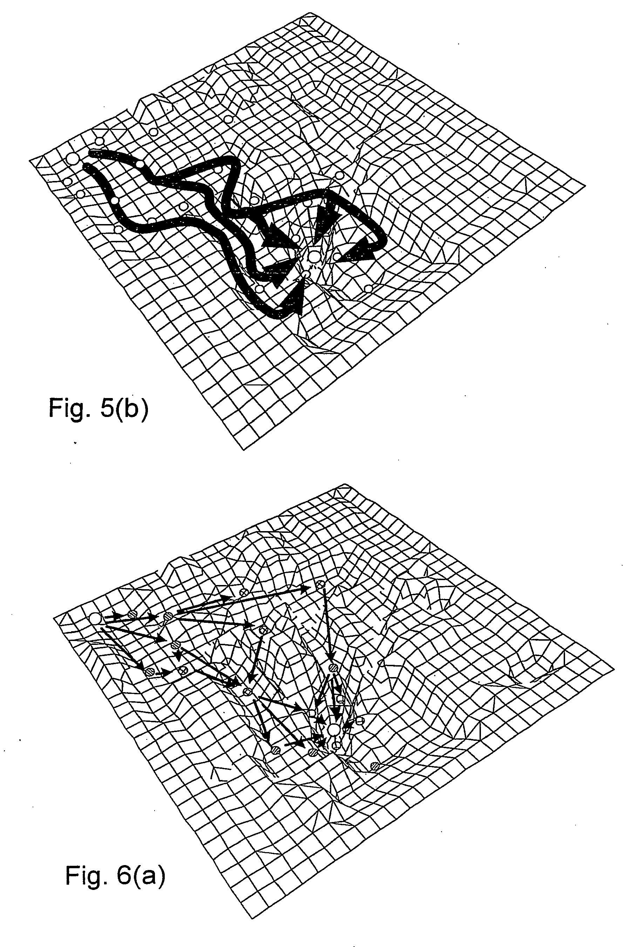

Similarly, S1 and S2 have neighbors S1.1-S1.5 and S2.1-S2.2 respectively, as well as other neighbors with higher costs to destination (S1' and S2'). In response to an RTS from S1 and S2, these stations (S1.1-S1.5 and S2.1-S2.2 respectively) will return CTS. However, S 1.5/S2.2 and S 1.1 do not actually have any neighbors with lower costs to destination themselves when they send out RTS; which implies that the connectivity conditions at these stations changed relative to their neighbors that had lower costs to destination, or their resources suddenly became unavailable. S1.1 would not return an ACK to S1, so S1 would send a new RTS after a predetermined time (possibly at a higher power and/or on a different channel) and based on CTS responses would resend the packets or instruct another station to send any of these packet received in redundancy. Figure 5(b) shows the typical gradient formation of Figure 5(a) more generally, using broadly defined lines to better illustrate the likely routing through which the gradients are likely to be constructed.

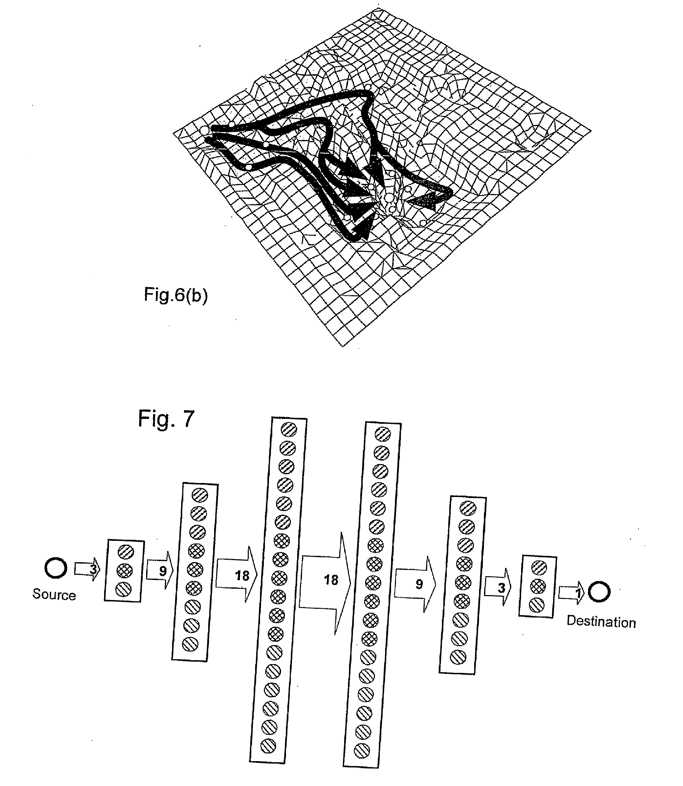

So the process goes, through the various stations ever closer to the destination. Figures 6(a) and 6(b) show the possible routes to destination available after connectivity conditions have changed providing a different topography of costs to destination - in this case providing even more potential paths initially, with some of the options being more diverse. It will be appreciated that there are many new potential neighbors to use as the routing moves away in number of hops from S. In Figure 5(a), S had only 2 relaying possibilities, for example, but between S1 and S2 there were potentially 5, and so on as the routing options diverge; then decreasing again as the stations are converging closer to the destination, until only a few candidates are available for the last hop.

This feature is demonstrated schematically in Figure 7, where the source station is illustrated as having 3 neighbors with lower costs to destination, which in turn together have a total of 9 neighbors to which data can be routed through, then 18 neighbors. This means that packets located at any one of these stations have an increasing diversity of choices provided from the increasing number of parallel options available as the number of neighbors expands, thereby enabling ambitious hops to be made by virtue of the choices provided. As the path gets nearer to the destination, fewer stations become available at a lower cost to destination as the path converges toward the destination.

Consequently, to increase the probability of success at destination stations or at concentration point stations that are utilized often, such as at gateways, wired paths would provide a higher probability of success. The drawing consequently reflects the number of paths available to neighbors with lower costs to destination increasing or diverging outwardly initially, stabilizing and then decreasing again towards the destination; where ultimately only one neighbor, the destination, is available.

The path conditions and background noise at each neighbor is dynamically measured from the fast probe (considerably more quickly than the slow probe) allowing the choice of which neighbor is best to be made opportunistically at the moment of transmission. Consequently, the neighbor having the best gradient to destination is not necessarily the station chosen as a relay; as the cost of the transmission between the station with data to send and its own neighbor with the best gradient to destination of its own could be high relative to the station's other neighbors. There are also other considerations which are discussed below.

The combination of slow and fast probe mechanisms means that the station only needs to ascertain that the neighbors have a lower cost to destination than the station wishing to send data. From these, a decision is made opportunistically at the moment the data is sent - packet by packet - in respect of the best connectivity to the neighbor. So if there are choices available and connectivity suddenly improves between a station and its neighbor at the moment of transmission, provided the cost to destination of the neighbor is lower than that of the sending station, then that neighbor will generally be used as the intermediary. It will be evident that the monitoring of the neighbors' cumulative costs to destination is important, with the fluctuating cost between the station needing to send the data and the neighbor being less relevant in the sense that this changes quickly and this fluctuation is easily responded to opportunistically at the moment of transmission. Reasons for this may be that the neighbor is suddenly busy or its noise fluctuates etc, so neighbors can be chosen with low noise, good path-loss and that are not busy, opportunistically at the time of transmission.

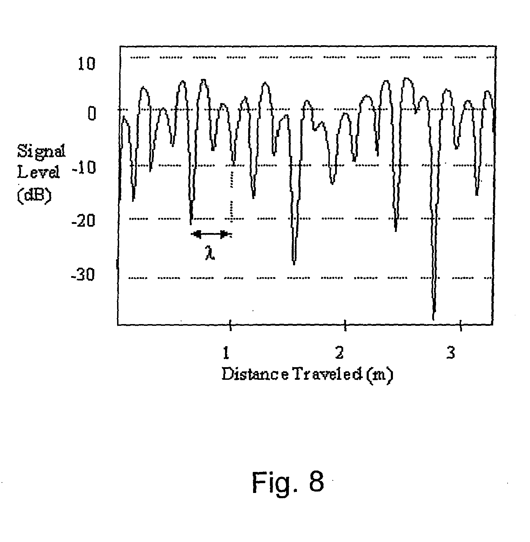

In a radio environment, dramatic fluctuations in available connectivity arise due to path loss and multi-path distortions, such as those modeled by Ricean and Raleigh fading which illustrate the destructive and constructive interference caused by waves. For example, at a frequency of 2GHz, the wavelength (λ) is a mere 15cm (speed of light ÷ frequency = 3x108 ÷ 2x109). Therefore the peak-to-trough amplitude in the wave occurs in 7.5cm and it will be evident that significant variations may occur over a very small space when other signals or reflections etc interact. Moreover, if the device is moving then the rate of change in fluctuations is even more pronounced as the speed is increased. This is illustrated in the graph depicted in Figure 8, showing a typical fading signal at 900MHz (λ = 33.3cm) over distance.

The average over time is determined through the probed cost information, but the peaks are identified by using the RTS/CTS cycles, etc. Through the collection of neighbors in the ODMA slow probe process, and through the information received in various probes and message interactions, ODMA transmissions may be sent at "peaks of opportunity" in connectivity. This means ODMA is able to take advantage of the very best connectivity conditions that may be available at any given moment (even if these preferable conditions are only fleetingly available) and the path taken is not committed to a single route.

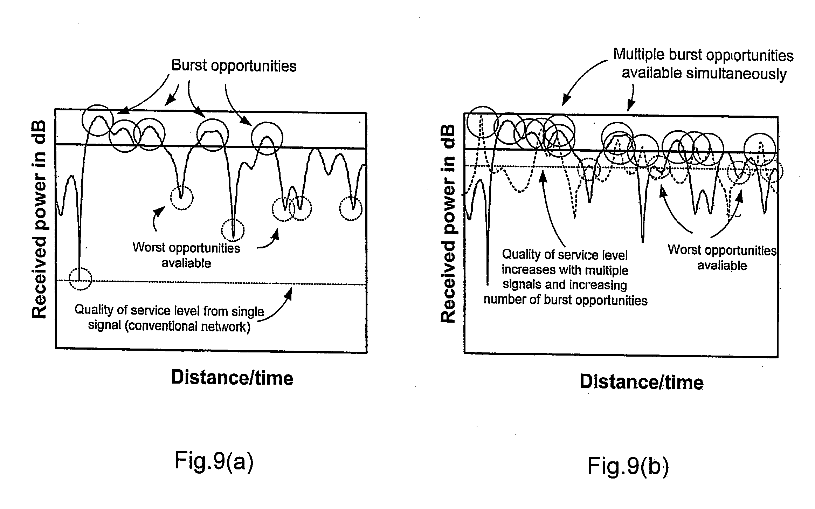

As connectivity conditions in wireless networks are so highly dynamic and changeable, the conditions that could be experienced in the different paths available are typically not correlated with respect to one another and consequently "diversity" is created (taking differing routes and experiencing entirely different conditions). This concept is illustrated in Figures 9(a) and 9(b). In Figure 9(a), a typical signal is shown in which peaks of opportunity may be evident at random intervals. It should be obvious that identifying these conditions and transmitting at these moments is highly advantageous. As a general rule, signals tend to fade with increasing distance, but as shown in the graphs, it is very possible that significant path loss can be experienced at small distances while very low path loss might be experienced at great distances. In an ODMA network this means that where it is appropriate, a transmission may enable a very long hop at low path loss, only to hop back again, rather than make a short hop at high path loss. Moreover, the sending station will not be attempting to overcome the interference in order to force the short hop, so by making the two longer hops the power level is actually lower and as the opportunities are isolated the transmission will interfere with fewer stations.

Having several neighbors provides diversity in the connectivity options that are available and makes more of the peaks of opportunity accessible in the transmissions; and in fact once sufficient neighbors are located the "burst" opportunities actually become available to the station all of the time, as is illustrated in Figure 9(b) where an additional neighbor is now available. The second available signal provides uncorrelated peaks as illustrated. It will be appreciated that if more stations were available, the effect would be to ensure that there are transmission opportunities available continuously at very high levels of connectivity. Indeed, in some circumstances there will be multiple peaking signals available as choices. Where no signals are available at peak burst levels, it will be appreciated that the transmission will be possible at the best of the poor choices available, which means that the quality of service available is more consistent and at a higher level than if only one signal was available. The ability to transmit at peaks of opportunity means that greater range and data rates are possible at lower transmitted power levels, which in turn minimizes the interference on other stations attempting transmissions.

In typical wireless transmissions, in order for the message to be received in full the data must be transmitted at power levels and data rates that will ensure the transmission overcomes the worst of the conditions; at a far lower range and efficiency than in ODMA. Obviously, if only one signal is available then the ODMA network is no worse off than would have been the case in a conventional network.

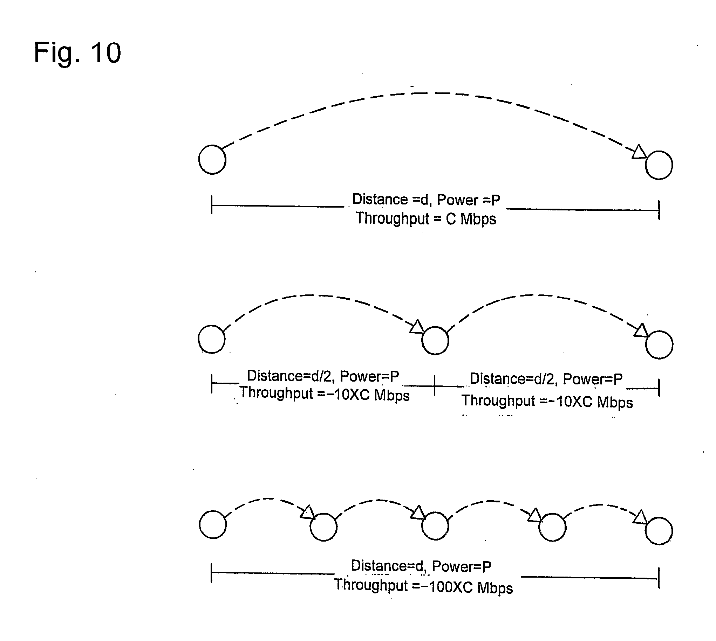

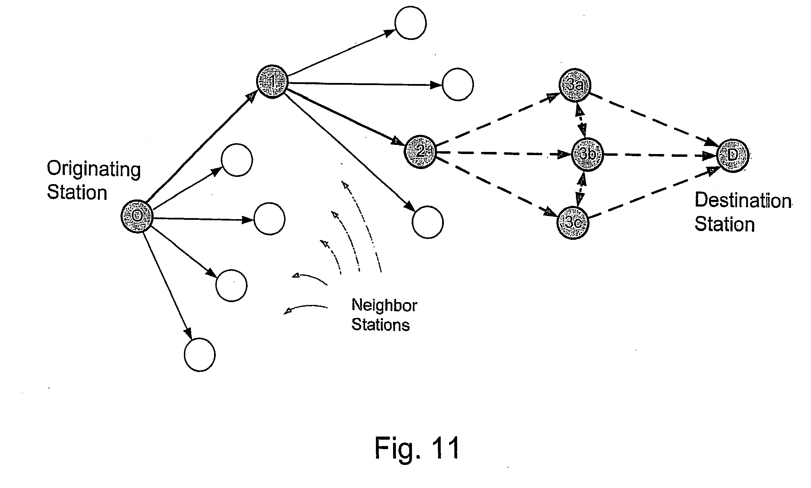

At a given power level requirement for transmission, one long hop may be available, which therefore would mean relatively low capacity for the same transmission power in comparison to a shorter hop. By interposing just one relay in between the stations (halving the distance) a gain of approximately a factor ten is achieved on throughput at the same power level. Rather than one long hop at a particular power level, ODMA might identify two hops (safer and shorter) enabling 10 times more throughput for the same power, as illustrated in Figure 10. However, in sequencing theory, any delay in the sequence will flow downstream. Consequently, to exploit the benefit of increased capacity, having several choices available prevents the delays (see Figure 11 as well in this connection and related discussion below). Using the vehicle analogy above, the choices enable the message to "change lanes" between the source and destination stations and avoid problems until the very last hop.

Perhaps counter-intuitively, increasing the number of user stations is beneficial as in an ODMA network capacity, resilience and spectral efficiencies increase with the number of user stations, while power levels required, noise and interference all decrease. Consequently, by maintaining neighbors that provide choices it becomes possible to provide considerably greater throughputs and transmission distances than would otherwise be considered possible using conventional methods. Moreover, the probabilities of successful network transmission increase in a network with more users even if more hops are utilized.

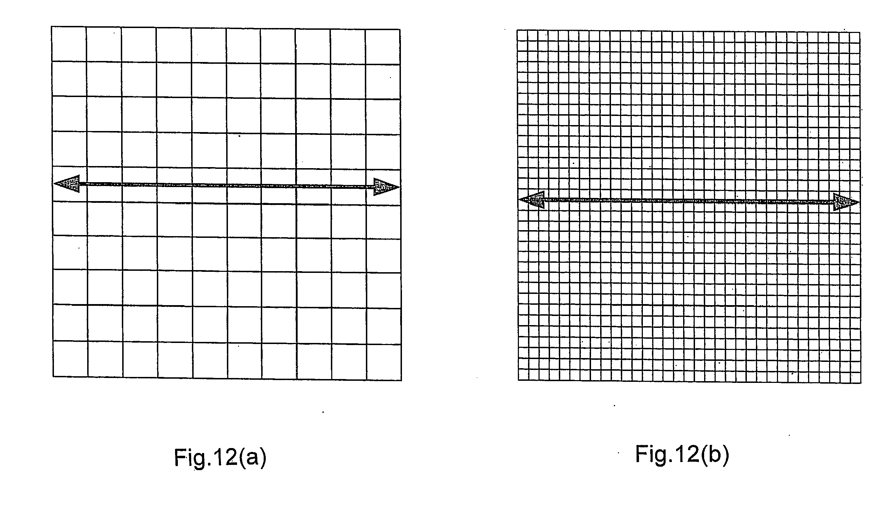

With ODMA techniques, multiple paths are always available enabling almost 100% transmission probabilities regardless of the number of hops and at the lowest possible power levels. (Compare conventional mesh relay systems that are reliant on multiple hops: even if there is only a 10% chance of failure in each transmission then there is a 40% likelihood that the transmission will fail over 5 hops, necessitating repeated transmissions, delays and additional interference.) As ODMA neighbors are close to each other, communications between them are isolated as they do not affect a wide area; so ODMA relaying essentially provides isolated "spot cells" that do not cause interference and still providing wider coverage and enhanced capacity. This concept is illustrated below in Figure 12.

In Figure 12(a), there are 100 subscribers, all of which are active relays. All communications will need a maximum 10 hops to cross the entire cell. In GSM traffic models, typically only 1% of subscribers are actually in-call If more calls are made, interference increases over the entire area. From a capacity simulation, assume that a cell of 100 subscribers could support seven calls. As a guideline, in an ODMA network assume that 10% of stations are acting as relays at any given time, while 90% are idle. Assume that each station strives to have 5 neighbors, and so in transmissions to one neighbor there may be interference with the 4 other neighbors. This means 33% of stations (2 out of the 6 stations) can be communicating at any time without interfering with other transmissions in the area.

If the maximum number of hops is set at N, each station might be required to relay at N times the use rate, so its duty cycle is 1/N (the duty cycle represents the utilization of time, channels, codes, etc, to transmit the message). Assuming that a transmission with a 10% duty cycle (1/10 hops) is equivalent to one unit of relay resource, to relay 7 calls requires 70 relay resource units (7 calls x 10 stations, each utilizing a full resource unit).

In Figure 12(b), the number of subscribers in the same area has been increased to about 1,000, all of which are active relays. Now all calls would need a maximum of 33 hops to cross the cell, and based on the same simulation the cell will be required to support 70 calls. Assuming that transmission with a 3% duty cycle (1/33 hops) is equivalent to 0.3 of a unit of relay resource from each station (it is working 3% of the time compared with 10% before), to relay 70 calls requires 630 resource units (70 calls x 30 stations x 0.3 of each station's resource unit).

So in this example subscribers increased by a multiple of 10 and calls increased by a multiple of 10; and hops per call increased by a multiple of 3.3 - but the duty cycle drops to 3% (from 10%). This means there are more resources, and the stations can potentially relay more information. Also, the distance between neighbors is one third of the original distance when the new subscribers are added. So if the path loss was originally 30Log(distance) then reducing the original distance by a factor of three means that the loss per hop is reduced by 15dB. So at the same power level, the data rate could be increased by a factor of three.

If the bandwidth used is increased three fold to achieve the three fold increase in data rate, then the erlangs/km2/Hz goes up by approximately three times and the power per hop is reduced by 10dB. In this case, the 70 calls (per 1,000 subscribers) would use the same aggregate power as the original 7 calls (per 100 subscribers). In other words, the area is more considerably more efficient, with less power being utilized to transmit messages at higher data rates.

Increasing the number of hops over a distance allows the data rate to be increased without increasing the power. Increasing the number of subscribers reduces the distances and increases overall network capacity.

If the nature of the message required is identified, the ODMA system can exploit the above features of range extension, increasing throughput and improved efficiencies by directing the packets opportunistically through choices that are more likely to suit the transmission needs. Time sensitive messages with low bit rates can be sent over longer and fewer hops, whereas voluminous, less time sensitive data can be sent reliably and efficiently over multiple, shorter hops with high bit rates. It should be evident that adding stations (typically subscribers) only serves to increase capacity as each subscriber added is a potential new relay, improving overall network performance markedly. One mechanism of achieving this is the use of gradient information, where gradients can be constructed with particular objectives.

The term "cost function" is very general, and is not merely based on the power to reach the destination station. Other factors could be included in the matrix that is used to indicate cost function. Costs could be allocated in terms of propagation conditions, such as the transmission power required to reach the next station (as usually described, owing to noise floor, interference and data rate), time delays experienced, the medium or channels used, the number of wireless and/or wired hops, the number of intermediary stations. Costs could also be allocated in terms of the resource utilization of the various stations, such as the amount of data already being relayed or in the buffer, the buffer size and limits, the channels available, the number of neighbors, how busy these neighbors are, data rates available through them, etc, as well as factors such as battery usage and capacity.

Gradients can consequently be defined in respect of a particular cost parameter, or as a combination of costs. Stations could maintain a gradient matrix comprised of various cumulative cost parameters, so that each station can determine which stations have a lower cost to destination in respect of certain parameters, or combinations of such parameters. Parameters could be assigned a certain cost depending on their value (as with increasing power required) and/or one of more of these cost types could be aggregated, or weighted, or more complicated formulas could be derived to be processed with specific objectives.

In this manner, all the variables can be mixed together in a formula to generate a specific value - or cumulative cost. Alternatively, the costs could be presented in a matrix of costs for specific parameters and/or a matrix of more complex combinations, enabling different types of gradients to be maintained or calculated. The station could then determine from the matrix the costs to destination that are relevant over different gradients - either from a general purpose matrix with all the information in it, or from a matrix that includes the results of more complex formulas.

As alluded to earlier in relation to station resources, the information in respect of each gradient is gathered in the fast probing mechanism, and any station along the route (including the source and destination) can add costs of their own into the matrix as well as the costs to the other stations. For example, the station could specify that it has low battery levels, or has a large buffer of data queued, or that it is poorly connected to its neighbor stations, or it has limited channels, etc and a cost could be applied making the station less desirable for use as a relay.

This form of information could be requested, for example in slow probes, in fast probes or in the RTS message (either querying a station for information on specific resources or gradients, instructing the station to generate certain gradients, or querying information from the station that the station sending RTS can use to make certain assessments on its own).

Different gradients may be more relevant to certain classes of data to be transferred. For example, packets with a short time to live or high priority could carry a suitable gradient identifier and follow one type of gradient, and other larger packets needing high speed packet transfer may carry a different gradient identifier and follow a different type of gradient. In the first instance, the packets could be small and follow a route with a smaller number of hops, whereas with larger packets, many hops may be acceptable to increase effective throughput. Packets could consequently follow a gradient identifier to route optimally over a cumulative cost function that is more tailored to its needs. Moreover, different packets in the same data message may have different identifiers, so that in a voice/video interaction, for example, the voice data may utilize the implicit acknowledgement data transport protocol described in WO 2006/043161 and be routed over few hops, whereas the video data may use the comprehensive algorithm described in WO 2005/062536 and utilize many hops.

Gradients may be constructed and maintained by a station to one or more destinations, and for different purposes (such as a low latency requirement or for high throughput and reliability). Each packet may specify its special needs in terms of time to live, security, reliability etc and stations can consequently respond in the RTS/CTS with intelligent information relevant to the needs enabling the decision to be made in respect of the next hop.

Figures 5(b) and 6(b) show broadly defined gradients formed over the path from source to destination though the source station's neighbors with lower costs to destination (from the examples illustrated in Figures 5(a) and 6(a)). As indicated above, gradients are defined by cumulative cost functions (not merely the relative cost between the source and destination). It would be overly burdening for resources and processors to sample the chaotic rate of change in the actual cost functions, so the cumulative cost function provides information that is valuable but which provides a higher level perspective of the average conditions to the destination. It will be seen also that given the large number of parallel paths available, the gradients defined are relatively stable despite any material fluctuations occurring between certain stations. However, in reality the connectivity conditions between the stations at the time of transmission are dynamic.

Gradients provide an indication of the costs to destination over time as they are averaged over a time interval, with the effect being filtered or damped to provide a more stable representation. RTS and CTS messages provide access to the dynamic information and represent more exact information at a particular instant and provide information in respect of the next hop. A station will depend on the RTS/CTS at the actual time of transmission to ensure that the packets pass through at each point owing to the likelihood that some path conditions will have changed substantially. As a hop is typically only made where the cost to destination is likely to be lower than that of the station sending the data, the packets are always getting closer (in terms of cumulative cost) to the ultimate destination.

An RTS message merely asks neighbor stations with lower costs to destination (down the slope of the gradient) to respond with a CTS. The neighbor stations review the RTS information and decide whether they are in a position to respond (for example, the cost to destination must usually be lower; packets in its queue must have longer time to live than the present RTS requirement; the data transmit time/duration/channel will not coincide with blackouts and that the station can receive one or more packets etc). This information could be passed on to the station sending the RTS in the CTS for further analysis by the station that sent the RTS, or the station that sent the RTS may request CTS responses only from stations complying with certain predefined criteria.

There are other factors that could also be incorporated in the CTS (and/or RTS), a more comprehensive list including:
- cost to destination or gradient, as defined in any number of formats;
- message/transmission priority;
- time to live;
- amount of data to be transferred;
- own station's information, including the buffer size (indicating the extent to which messages are retained or waiting to be sent, etc), how long data has already been held in the buffer, potential limits of buffer, etc;
- channels available and/or any channels prohibited;
- the number of neighbors, how busy these neighbors are, data rates available through them, etc;
- the condition of the connectivity with the neighbors of the sending station's neighbors, and the next layer of neighbors beyond, as well as the resources used or available at these stations (thereby providing the immediate conditions and resources two and three hops away from the sending station - discussed more fully below);
- path characteristics, including path loss, multi-path distortion such as phase and frequency distortion, bit error rates, packet failure rates, success rates/numbers of packets received, success rates in receiving and sending messages (RTS/CTS ratios, transmit to ACK ratios), interference conditions including background noise and noise floor etc on different channels (which interference conditions can be categorized, such as man-made, natural, source type, intermittent, continuous etc);
- battery usage and capacity;
- duty cycle of the station;
- average delays in messages getting to any destinations;
- ping round trip delays to different destinations and neighbors;
- total connectivity (for example, good connectivity to 10 stations, or average connectivity to 20 stations is better than 1 excellent link - that could fail); more stations in parallel are usually better than having a few in series (being similar in concept to higher resistance resistors being placed in parallel in electrical circuits, namely 1/R=1/r1 +1/r2 ...)).

If the station receiving an RTS is in a position to assist, the CTS is sent back to the original RTS sender and, based on the information provided in the RTS, the CTS will include information related to the neighbor's own information. The station that sent the RTS can then decide to transfer some data (or no data) to the stations that sent a CTS, and whether to use a particular channel or combination of channels for this purpose, etc. The station sending an RTS may instead send an additional instruction to one or more of the stations that returned a CTS message. This decision will typically be made based on the connectivity parameters, such as the noise floor, interference, quality of channels available, applicable blackouts (unable to receive data due to someone interfering with the receiver for a time), transmission power requirements etc, enabling the station sending data to choose how to send the data based on the information on the CTS. However, the decision can be made based on any of the relevant parameters provided.

If an RTS (or CTS from a destination, or from a point of concentration) receives no response, another RTS might be sent over a different channel to establish whether that is likely to be more successful.

Any RTS can also specify that more than one station should try to receive the data, in addition to the intended destination. Indeed, data can be sent directly after an RTS is sent, without the need for a CTS response prior to the data being sent, in which event the RTS can specify where the data will be transmitted. The sending station could then select a station or send an instruction to one or more of the stations specifying how to proceed based on the one or more ACKs received.

All the stations might be requested to receive the same data, or they might be instructed to receive different parts, and then be given the instructions. In these circumstances the stations that do relay the data could send an ACK back to the original station, or the relaying station or stations might simply be required to send an RTS of its own in respect of the data, in which event the original station would switch to the probing channel after transmitting the instruction and wait to receive what is effectively an implied acknowledgment that the instruction was received.

Alternatively, the sending station may send instructions based on the (multiple) CTS messages received in response to the RTS and then send the data in a specific way to one or more selected stations, and possibly sending different parts of the data to different stations. These stations could also return an ACK upon receipt of the data, or use the RTS implied acknowledgement feature.

Clearly, if only one CTS was originally received the data will only be sent to one station and that station might be instructed not to return an ACK as the sending station can return to the appropriate probing channel and await the receipt of the RTS implied acknowledgement. Also, if only one ACK is received after the data is sent to the multiple stations that returned CTS, the sending station will send an instruction only to that station to send the data; and again, the implied acknowledgement methodology might be applied.

These mechanisms provide choices for forwarding, with the CTS stations possibly being instructed to send part, or all, or none of the data.

Data sent can be targeted to a particular station or to several stations and/or on more than one channel simultaneously. In other words, the data may be sent to multiple stations simultaneously over the same channel or over multiple channels. In addition, the message could specify which particular pieces of data are to be sent, the order of the pieces, and to which station these pieces will be sent. Neighbor stations listening to the data sent to a particular station will be able to establish whether their own resources are to be utilized. The benefits derived through this process of sending to multiple recipients are that the data is potentially broadcasted, and if there are multiple responses then there are potential choices made available for selection in the decision to continue. This affords the possible inclusion of intelligence in the interaction - the CTS can include information relating to its relative conditions and what it can achieve with the data, and the sending station can instruct the station how best to proceed based on the intelligence gathered from the stations. This is not only relevant to the scavenging functionality, but stations can be targeted to perform particular functions based on the information they have provided about themselves.

As stated in WO 2005/062536, the term "channel" can relate to different frequencies, media, coding, time slots, antennas, etc, and to different combinations of these. The channel(s) to be used for data transmission, or pieces of data, can be specified in relation to a particular station.

The transmission cycles may be tailored to the conditions. For example, the following mechanism is more likely to be used where more reliable connectivity is expected and all stations are likely to receive the same RTS: RTS including instructions → multiple CTS → send data → multiple ACKs. Alternatively, the following mechanisms might be used where the links are considered less reliable, in which event the data would be more likely to be routed through different channels etc: RTS → multiple CTS → Instruction (for example, move to a channel, accept certain data etc) → send data → receive multiple ACKs (could be another instruction after this - for example, for scavenging purposes); or RTS → multiple CTS → send data → receive multiple ACKs → Instruction.

By way of example, the some of the possible cycles may operate as follows:
1. RTS, including data transmission (DATA). Sent to one or more of the RTS station's neighbors, one of which receives the data and sends new RTS with data transmission to its neighbors. Other neighbor stations of the initial RTS station hear the second transmission so can infer that there is no need to act on the initial RTS request, but may, or may not, be in a position to assist with the next hop.
2. RTS, including DATA - ACK(s) - transmission of information, such as instruction (INSTRUCT) in relation to which of the stations that transmitted the ACK should proceed, and possibly instructions regarding the manner (one or more stations, to proceed with all or part of the data transmission) - DATA - (possible further ACK(s)). The RTS could specify which stations are to return ACKs based on certain criteria and the RTS might specify what information is to be returned; and the manner of returning the ACKs can be specified in terms of time slot, channel etc. The information provided in the ACK could assist the initial RTS station to make the decision about how to instruct the stations.
3. RTS - CTS - DATA. The RTS can request any of the neighbors to respond, or specify one or more distinct neighbors to respond, or for randomized responses, or for specified sequential responses etc. The stations can be asked to respond in a specified manner, on a specific channel or time slot, for example. The RTS can specify what is being sent in the DATA and specify criteria for responses, or it may request that the CTS responses provide information in respect of certain criteria, or only provide the information if the criteria is met, and may specify where the CTS station should listen for the next message. As the CTS stations will all be ready to accept data, the message from the station sending the data message can specify the station(s) to receive all/part of the data, and also include in the message any other data relevant to these stations or to other stations in relation to that which is to follow, together with the channels to be used, or the parallel time slots or channels. Alternatively, the CTS stations can tell the RTS stations where to send DATA. The RTS stations can even send multiple RTSs in → sequence to particular stations, or to groups of stations collected as neighborhoods for certain purposes or on different channels. This could provide the benefit of not receiving multiple CTSs simultaneously and avoiding collision, or can avoid many neighbor stations being tied up simultaneously. This is still opportunistic as the stations probed RTS in sequence may not be available all the time.
4. RTS - CTS - data transmitted - ACK(s) - transmission of information. In this cycle the station sending RTS can send the data to one or more of the stations selected from the CTS responses and then instruct one or more of the stations that have received the data to transmit the data on in a certain manner; such as simultaneously, in certain channels, time slots etc. In this manner, in the event that a particular station is corrupted, another station may already have received the data simultaneously and that station can revert back to the source that they have the information available, and request confirmation that it can be re-sent (the process known as "scavenging").
5. RTS - CTS - transmission of information, in respect of which stations are about to be used, and for what purpose - possibly INSTRUCT - ACK - data transmission - ACK. In other words, the RTS transmission may specify the channels to be used to return CTS and which stations are intended to be recipients, thereby enabling the relevant neighbor stations to move to the correct channel specified and await the transmission or further instructions. The return of ACKs being interposed in the process provides immediate information in respect of connectivity conditions or other conditions which may influence the decision of stations to use and the manner.
6. RTS - CTS - data transmission - multiple ACKs - transmission of information. As the source station sends data it may receive information in the ACK messages informing it that packets have been received, which also assists the original source station to choose from the CTS responders where best to send the data at that moment, because information regarding the latest connectivity conditions and/or intelligence will be available.

It should be evident that other combinations of cycles are possible, and data rates and packet quantities can also be varied depending on the quality of the signal specified in each CTS/ACK. Information may also be provided in other response messages such as Not Acknowledged (NACK) and Ready to Receive (RTR). In this manner, it is possible to choose power levels, data rate, packets to be sent, etc, in the time available channels. If a station has multiple radios transmission and receipt can take place simultaneously, enabling many combinations of interactions. For example, the RTS/CTS cycle could lead to data transmission on a particular channel, while other RTS/CTS cycles take place in a different channel, therefore receiving RTS/CTS while also sending/receiving multiple data streams. (Multiple receipt/transmission is full duplex; multiple channel receive or transmit is possible with duplexing filters utilized in place of the Rx/Tx switches.)

The degrees of freedom in diversity that can be specified and/or adapted in the RTS and CTS (and other response messages) are:
- Time (when to send);
- Channels;
- Modulation type;
- Code (even on same channel), spreading code, forward error correction (FEC) etc;
- Data rates;
- Power level;
- Packets - packet types and different packet sizes can be used, and different error correction codes may be utilized (for example a very rugged error correction code could be incorporated to ensure information gets through a difficult channel);
- Antennas - the same channel can be used by one station but on different antennas - likewise a station receiving RTS can report on CTS that it can transmit and receive on one antenna or on more antennas simultaneously, and then receive information in respect of which sending/receiving antenna is better.

Typically, a CTS is only returned if the station is in a position to assist, and does not necessarily specify other parameters, such as how much data is already queued in the buffer of the CTS sender, or what the message priorities or times to live are. However, a CTS could be transmitted with information relating to the stations' capabilities and resources, so that the RTS sender can determine which stations are less loaded. Data would then possibly be sent to a station with a small buffer load, even if the data in the buffer has a higher priority, as this would be more efficient for the network than holding back a large buffer with a lesser priority. The RTS could also specify certain criteria or requirements, for example, that only stations with low buffers and/or high battery levels respond, and only if the cost to destination as defined by a certain gradient(s) is (are) lower than its own, etc.

This methodology of gathering information on the resources of the stations provides some "back pressure" on the manner in which transmission are made. The RTS could specify the parameters that are relevant, and stations would not report CTS if they are too overloaded (thereby reducing interference by not sending these messages) so that sending stations will distribute load away from areas of congestion where possible. In other words, in the canvas/canyon analogy depicted in Figure 4, if packets were flowing down different paths to the destination, the CTS responses push areas of the surface back up (increasing the cost function), preventing damming up so that the droplets/streams are encouraged to flow in alternative ways.

If a message is sent, but the receiving relaying station is unable to pass the message on for some reason (gradients are relatively slow to form compared with the RTS/CTS cycles and a problem may not be evident in the gradients yet), then the RTS it transmits can specify that the message can revert back to find another way. In these circumstances other stations will know that the message is permitted to go back "up hill" to stations with a higher cost to destination (as many levels up as may be needed) and then flow down again by conventional techniques (avoiding the trouble spots for a certain time). This means other stations that typically would not have responded CTS may do so as a means of "emptying pooling" through a revert-back mechanism. This feature may become especially relevant at the last hop to the destination (see Figure 11, where a message at 3b could be passed to 3a and/or to 3c, failing which the message could be passed up to 2, which could try its neighbors (excluding 3a-c), failing which it could be passed up to 1 to try from there. In other words the message backs up to the extent necessary to find a new path around the problem.

If the destination is receiving packets out of sequence, it means the destination has to start buffering before it can run the application. The rolling buffer and the sorting that is required are caused by the data spreading out through various stations and then re-converging at the destination (see also Figure 7). As the hops get closer to the destination station, fewer paths will be available that have a lower cost to destination and data will start to dam up - as ultimately the destination station is the only available choice. Consequently, the destination station will then be very strict in its CTS responses in relation to the RTS transmissions it receives. The issues relating to the sending stations in respect of RTS now apply in reverse to the destination in respect to CTS; for example, multiple specific stations can be mentioned in one CTS sent by the destination. In this manner, one CTS message can be used to reply to many RTS transmissions received (the opposite of that specified for RTS signals sent from a source station to many potential CTS neighbor stations). The destination can specify in the CTS who is to use a particular channel, time slot, coding, etc. Alternatively, multiple CTS messages could be sent on different channels simultaneously (if this is possible), or sent in sequence to different stations etc.

In fact, at any point of concentration (or where a station is being overly utilized) a broadcast CTS can be sent instructing multiple stations in response to multiple RTS messages (scheduled if necessary). The data would be sent according to the instructions (probably in several DATA transmissions) and then the ACK returned could also provide information about what has been received at the station and, if necessary, other instructions to one or more stations could be provided in the single ACK.

At any station with a many-to-one situation, particularly at any point of concentration such as at the destination, the CTS can respond to multiple RTS transmissions that have arrived on different channels, which provide an indication of the best channel. The multiple RTS transmissions could be sent by one station on the various channels, or the RTS transmissions could come from several stations on one or more channels.

If the one station sends multiple RTS messages, the receiving station could return a CTS only on the channel with best connectivity at the time. Equally, a CTS could be sent by a point of concentration or the destination on multiple channels and provide specific information relating to the characteristics experienced over the channels. In any event, through the information provided in the CTS(s), the data can then be sent sequentially by one or more stations, over one or more channels and possibly in defined time slots, as instructed or based on the information provided, ready to be picked up at the destination.

At a gateway or access point, different channels may be provided in parallel, and simultaneously, so that data can be sent over the different parallel channels with ACKs being sent individually.

It should be appreciated that data sent in response to multiple CTSs may be intended for multiple destinations. If all the available stations are receiving the data, they will be able to pass the information to their neighbors, and to theirs in turn, and thereby it is possible to flood the data through to many destinations very efficiently.

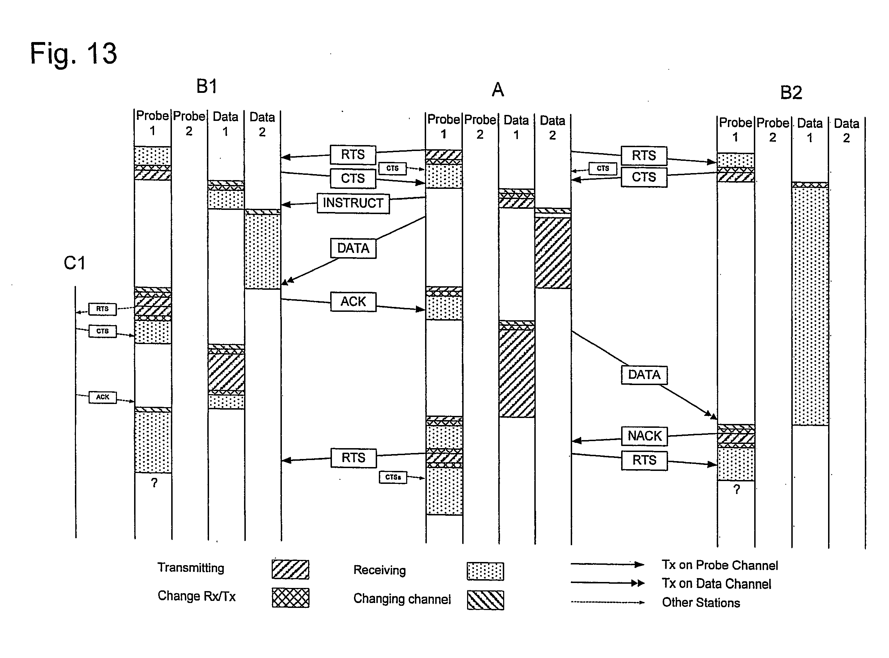

Figure 13 shows a first example of a cycle that may arise in practice. Station A has two neighbors, stations B1 and B2. Station A wishes to send or relay on a message it has received and sends out an RTS. The RTS is sent on the Probe 1 channel and requests information which it specifies should be returned on the Data 1 channel. Both Bland B2 are in a position to return CTS based on the RTS request, which they send on the Probe 1 channel, and they then switch channels to Data 1 and wait to receive further interaction (if nothing was received after a certain time interval, which could be set by the station sending RTS or by the station sending CTS or it could be a default period, they would return to the Probe 1 channel).

Realizing from the CTS returned from B1 that Data 2 is a good channel for the type of a part of the information it needs to send (high priority), A sends an INSTRUCT message telling B 1 to switch to Data 2 and may have specified a time slot; thereafter it sends DATA and B1 ultimately returns an ACK. It can be seen that B 1 then sends an RTS out, which is received by its neighbors, including C1, which returns CTS (possibly among other CTSs received). DATA is transmitted to C1, an ACK received in the Data 1 channel as requested in the DATA and B1 returns to the Probe 1 channel.

In the meantime, A has delayed transmission of the remaining part of the DATA to B2 while it communicated to B 1 in the INSTRUCT message (which B2 would have also received as it was on the channel). It may have scheduled one or more time slots for this purpose, as A needed to "orchestrate" the communications to some extent. Allowing for the defined wait time that B2 would remain on Data 1, and recognizing that this portion of data was less time sensitive, A could wait to send this portion later (although it could have provided instructions to B 1 in the INSTRUCT message). However, after the DATA is sent to B2, A receives a NACK (not acknowledged) on the Probe 1 channel (where it had instructed B2 to respond in the DATA), at which point A attempts RTS again for the remaining data. B1, B2 and/or other channels might be involved in the next cycle depending on the prevailing conditions.

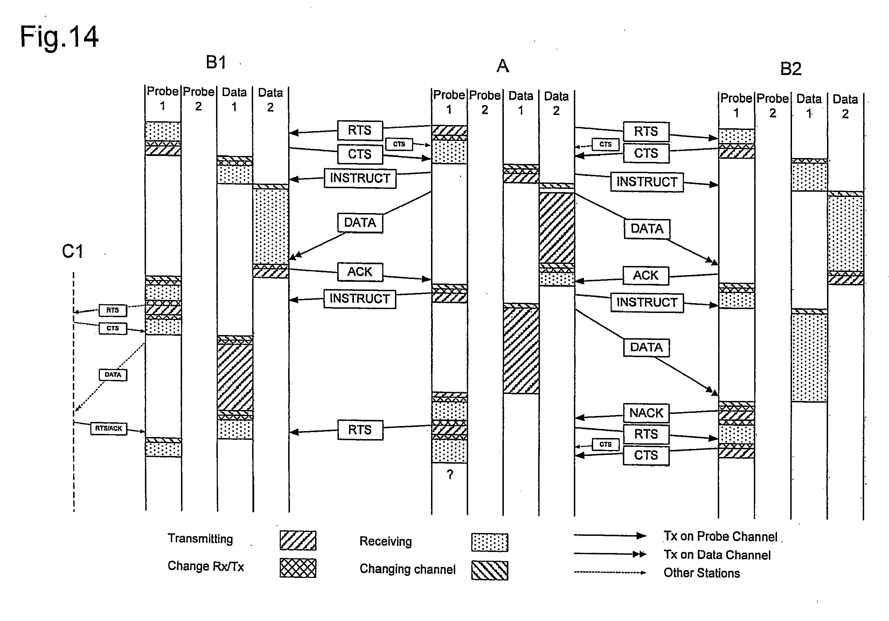

Figure 14 is a variation of the example of Figure 13. Here the INSTRUCT message is directed at both stations B1 and B2. Given the time sensitive nature of the data to be sent, station A instructs (on the Data 1 channel where the stations moved) both stations to receive the initial portion of the DATA on the Data 2 channel, where A determines conditions are favorable. Both neighbors receive the information and return ACK messages, and A determines that B 1 is best placed to receive (based on the information in the ACKs) and a second INSTRUCT message is sent to B1, which sends the DATA on successfully to C 1 as indicated. The second instruction, also tells B2 to move to the Data 1 channel to receive DATA, which is sent but a NACK is returned on Probe 1. A immediately sends out an RTS to attempt to send the DATA again, which is again received by B2 and a CTS returned (possibly together with CTSs returned from other neighbor stations). However, B1 is busy interacting with C1 on another channel at the time the RTS is sent so B1 does not return CTS.

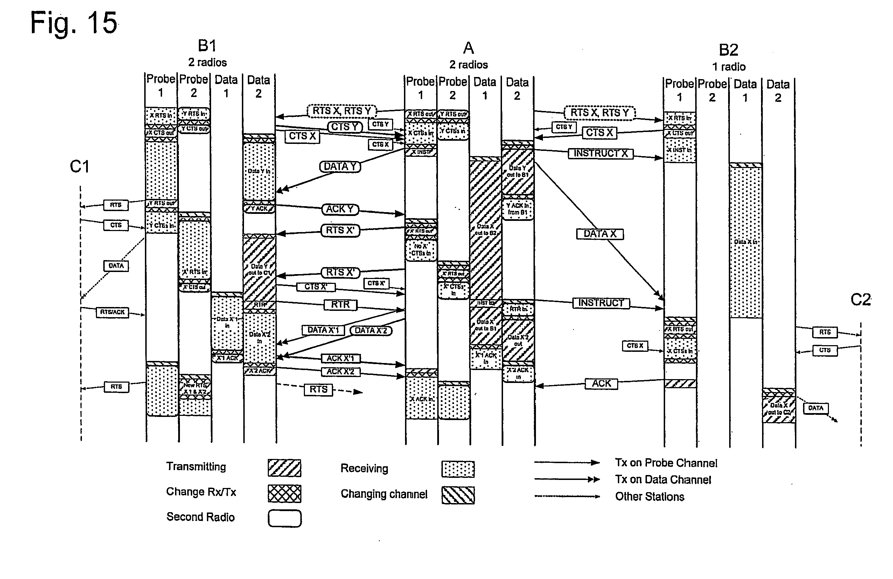

Figure 15 shows a third, more complicated, example in which station A has two radio transceivers available to it, as does station B 1 (the second channels are indicated in the figure marked in bold and with rounded corners). In the present example, A sends an RTS in both the Probe 1 and Probe 2 channels; RTS X requests information from the neighbor stations while RTS Y instructs stations meeting certain pre-defined criteria to respond on the Probe 2 channel with certain information and to then move to the Data 2 channel. (It will be appreciated that the RTS X and RTS Y messages could have been combined and sent on both stations simultaneously to maximize the chance of locating opportunities on both channels.)

B2 is only receiving on the Probe 1 channel when the RTS messages are sent by station A. Both B1 and B2 return CTS X; while B 1 also returns CTS Y and immediately moves the second radio to the Data 2 channel to await further messages as instructed. On receiving CTS Y responses, A determines that B1 is the best selection and so A's second radio is switched to the Data 2 channel, set to transmit and the message is sent to B 1 on the Data 2 channel. B1's second radio then switches to transmit, sends an ACK, while B1's first radio is already busy sending RTS out on Probe 1, in response to which it receives CTS from C1 (and possibly others). The first radio sends the Y DATA on to C1 on the Data 2 channel which (both Data channels being available to B1, but the determination being made through the interaction with C1 and other stations). As both B 1 radios were busy handling the Y DATA and messaging with A, and as B2 is busy using its only radio on another channel, the RTS X' is not received by either B 1 or B2.

In response, A changes to the Probe 2 channel and sends an RTS for the X' DATA. After sending the ACK for the Y DATA, the second B1 radio returns to its initial idle receiving status on the Probe 2 channel and is available to receive the second RTS X' message to which it responds with a CTS specifying that only the Data 1 channel is available immediately, but that Data 2 will become available shortly and that it will send RTR when it is available. As the conditions are better for transmission to B1 than B2, A instructs B2 to stop receiving DATA and to send what it has on to other stations. The instruction also specifies that an ACK should be returned, but specifies that only certain time slots will be available on Probe 1 for this purpose. A then sends X' 1 to B1 on Data 1 and knowing the conditions on Data 2 from the RTR sends certain remaining X DATA (X'2) to B1 on Data 2 (both B1 radios return ACKs).

In the meantime, B2 successfully sends the X DATA it received to C2 and returns an ACK as instructed; A also receives the RTS from B1 in respect of the X'1 and X'2 DATA, so even if the ACKs in respect of this data had not been received at A, A would have determined that the RTS amounted to an implied acknowledgement that the messages had been received.

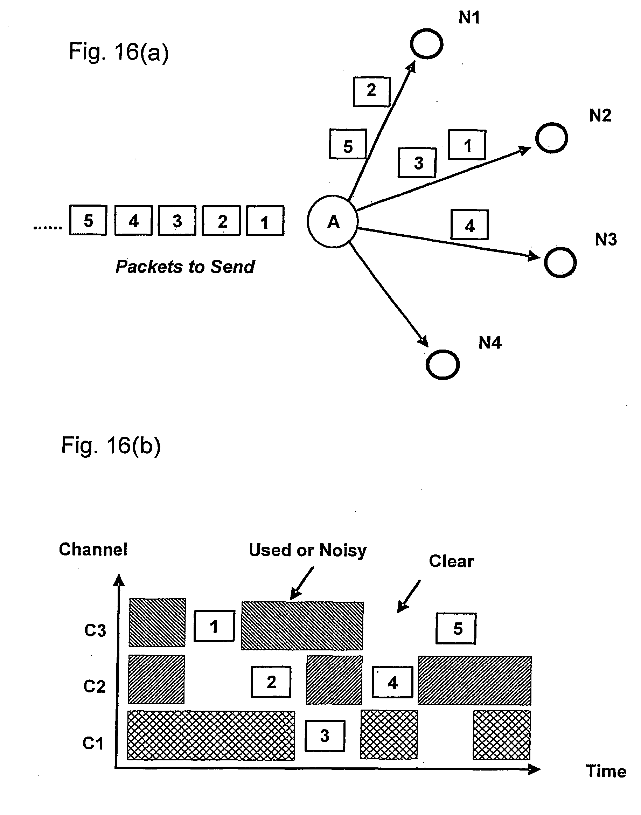

Figures 16(a) and (b) show an aspect of the data transport process, where stations are attempting to communicate in difficult conditions. In these circumstances, the information provided in the CTS assists the sending station to send the message, even where noisy or high interference conditions occur. In Figure 16(a) station A has a number of packets of data that it needs to send. An RTS is sent to stations N1-4 and CTS responses are returned. In the CTS (shown in Figure 16(b)), the stations specify whether channels are available and include other information, such as whether the channels are noisy.

In order to understand this, assume that the depiction in Figure 9 showed signals creating interference conditions. It should be evident that it would be advantageous to locate the gaps in the interference to minimize the effect of the interference, in which event the peaks of opportunity to send information through the interference would actually be the troughs identified in the interference. These troughs are essentially the gaps in the difficult conditions and a station can take advantage of these to send signals at minimal power levels and minimizing its own contribution to the difficult interference environment. In Figure 16, after receiving the various CTS messages, station A then is able to decide whether to use certain stations for the transmission of certain packets. All the stations will be listening, ready for data transmission, so, for example, A can transmit information that all stations should switch to channel 1; or A could specify in sending the first packet to a specified station, N2 for example, that the second packet will be sent to another specified station, N1 for example, on channel 2 (and by listening N1 will know to change to channel 2 even while the sending station is still transmitting to N2), etc. In a noisy environment, the other stations could be asked to receive the packet as well for purposes of redundancy and possible subsequent scavenging.

In this manner, as various channels are available, A can locate and utilize the clear segments, or holes/gaps in the interference, that are available in a noisy environment and get the data through where other transport mechanisms following a defined path would simply fail. In addition, by minimizing the messages sent to neighbors, A is not contributing unnecessarily to the interference and background noise.

Reference was previously made to Figure 7 in relation to the diverging path opportunities that become available in an ODMA relaying network. Conventional communication systems have no or very limited divergence and convergence available in this manner. Generally systems have only one route available to them. In conventional mesh systems there may be one primary route defined at each relaying node, with another route possibly being available for redundancy. In the ODMA methodology the limitation is only at the destination, but even at this stage multiple stations may be attempting to communicate with one destination over different paths. In ODMA there is the option of diverging out again, even where there are no other stations (other than the destination) with a lower cost to destination.

In circumstances where the station fails to make the last hop, other well connected stations may well be in a position to provide this last hop. Figure 11 shows this process, where stations 3a, 3b and 3c can all assist in making the last hop. In the RTS from one of the stations, for example 3b, it will be clear to stations 3a and 3c that the station is attempting to transmit data to the destination. These stations can return a CTS to 3b indicating that they can assist, even if at a higher cost to destination. This allows connectivity to be provided in problematic situations, where even though it appears from gradients that a station is best placed relative to the destination, the message cannot get through in whole or in part for some reason. Other neighbors are identified in the RTC/CTS cycle that may also have a high probability of success so this many-to-one situation can try to ensure success. Once the data has been successfully transmitted the other stations can be notified.

Neighbors also help solve problems. It may be difficult to send all the data initially from the source, as the station will be busy all the time (in virtually every time slot and channel available) passing packets to its small number of neighbors with lower costs to destination than itself. However, these few neighbors will have more time available than the source, as they only need to establish a means to pass their own share of the total data through their own neighbors, allowing them to retry and do more in the meantime. As the path converges on the destination, the destination will also be using every time slot and channel as efficiently as possible in order to absorb the information. As the neighbors at this stage are very closely connected, there is a high probability of the packets being received.

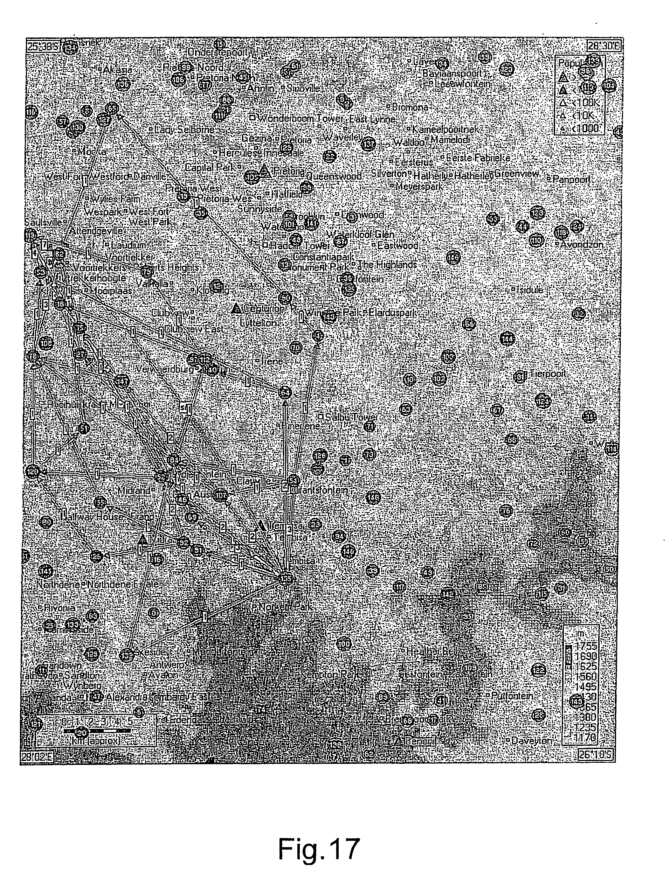

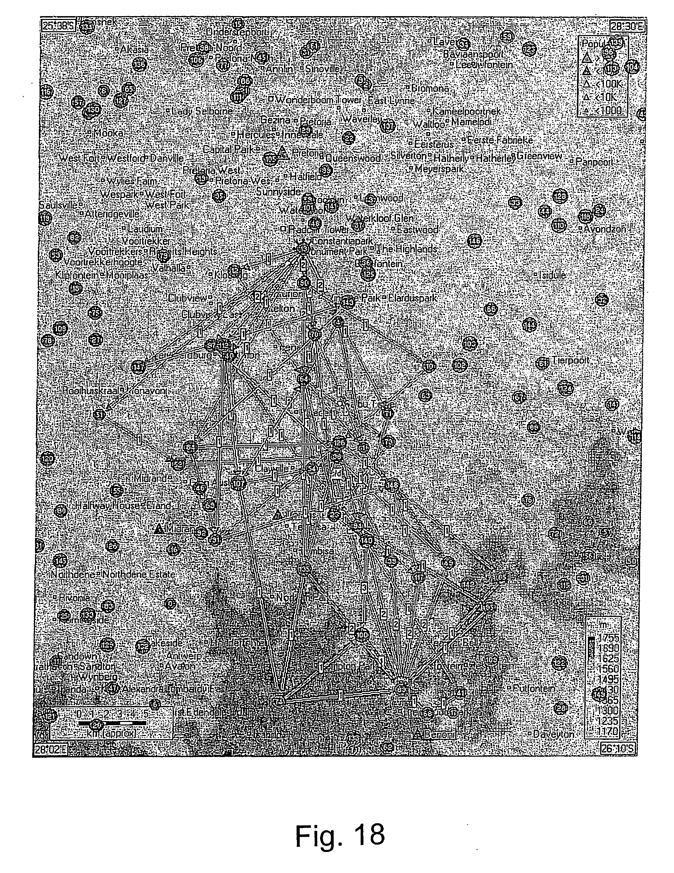

Figures 17 and 18 show simulations of transmission summaries of data transmitted over a particular terrain (located around a city in South Africa) for the entire interaction between the stations. In Figure 17, a station (135) is sending approximately 20 packets of data to a destination (119) through peer-to-peer communication; and in Figure 18, a station (13) is sending packets to a destination (89). The initial aspect to notice is that there is considerable diversity in both of these simulations, where the vast majority of stations have only been utilized for the transmission of one or two packets. The simulations were modeled over a large area (demonstrating coverage) in the VHF spectrum.

In Figure 17 the source station (135) had seven neighbors available initially (132, 91, 69, 46, 107, 54 and 64), but only four were available at the destination (79, 82, 18 and 53). The source station had substantial diversity, but the limited number of paths available at the destination required that one path was used more. However, as the station was so close to the destination the quality of connectivity was good, so the transmission power was very low and the data rate very high which is desirable. Some small packets were transported considerable distances (for example 135-82 and 4-65), but these hops could have been at low power and low data rate.

In Figure 18, there is considerable diversity throughout the stations in the terrain; so long hops at very low power are possible, especially where there is considerable diversity, with shorter hops automatically occurring nearer the points of concentration. As such, the resources of the stations utilized are hardly affected, with a large throughput being spread thinly over a wide number of routes.

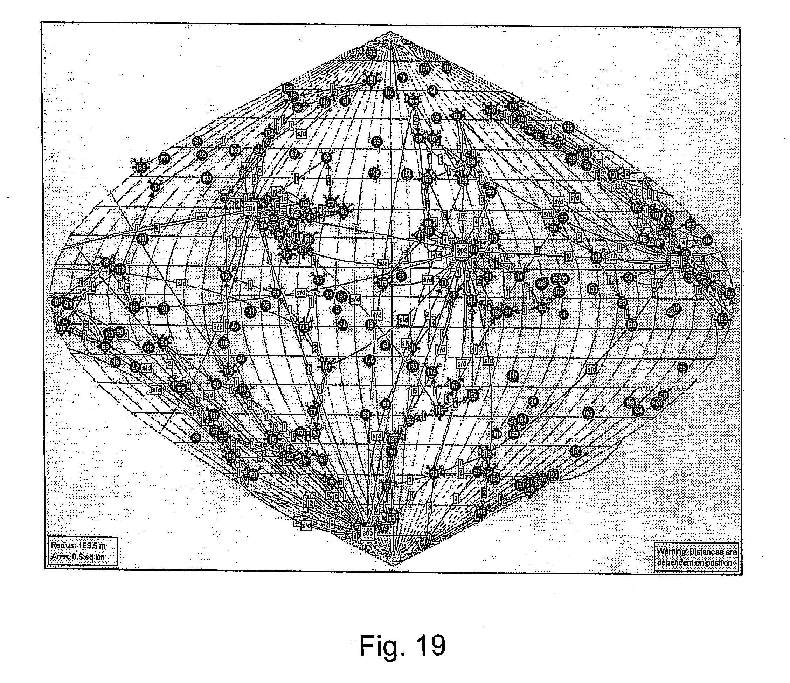

Figure 19 is representative of an area with high interference and points of concentration - here these points are gateways (201-204) - over a one second period. The area is representative of a globe; and station 168 is close to stations 8 and 196 for example. Considerable amounts of data traffic converge at the gateways (up-link situation), at which points the number of paths available decreases and larger volumes of traffic utilize these paths (relative to the links further away from the gateways). Again, because the neighbors near the gateways are so well connected, the data rates can be very high while still transmitting at low power levels. The last hop is optimized for data throughput and packet durations, etc to avoid interference with other gateways.

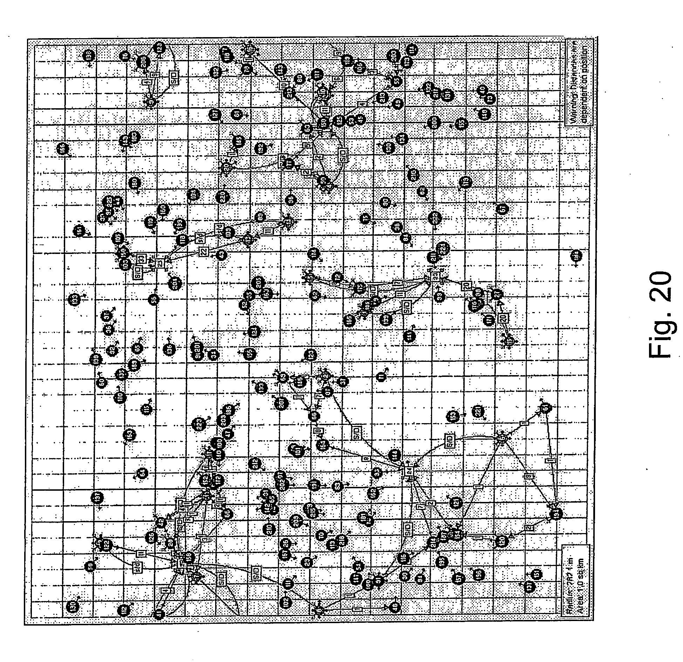

Figure 20 is a down-link scenario into gateways in an area with limited diversity and high interference. It will be noticed that the routes are not well distributed and certain links are depended upon entirely for all the packets transmitted (see 15 for example). This scenario may arise in a sparsely connected area, or where interference is very high, so there may be very few neighbors to assist.

It should be evident that in the RTS-to-CTS transmissions, the gradient is not the main factor in the decision-making process. The gradient is rather a factor that enables the stations to determine which immediate intermediaries are likely to have lower cumulative costs to destination, and which should return CTS. Provided that the relaying station has a lower cumulative cost to destination, a station could be chosen that has a less attractive cost to destination than another, but which is considered safe - as a small safe hop may be more preferable than a long dangerous one. Several shorter hops are generally better than one long hop, as shorter hops typically require less power and facilitate higher data rates.

For example, if three neighbors respond to an RTS message, the sending station can look at the signal strength to get to each of the neighbors and there may be a ten times advantage (10 dB) to one of the stations - which means that ten times the data can be transmitted, for the same transmission power. If the distance is halved between stations, a 12 dB advantage is achieved in a typical cluttered wireless propagation environment, which is nearly a twenty times gain. In other words, two or more hops may be better than one, especially where large amounts of data are being transferred.

In 802.11 and WiMAX there is a huge spectrum of data rates available. There may be a 1,000 times difference in data rates available, and over very short distances throughputs in Gbps or Tbps are possible at very low power levels. As data rates are increased, more channels can be used - for example, you could probe in 802.11 (g) where low data rates at 2.4GHz are provided, and then transfer in 802.11 (a) where higher data rates are possible at 5GHz. Where a strong signal is available, high frequencies and high data rates can be used as there are good opportunities available as choices - which is especially relevant at the source and destination.

It should be appreciated that general ODMA principles provide for the originating station receiving information about its neighbors; and as these neighbors in turn have information from their own neighbors. In other words, any station receiving information relating to its neighbors' connectivity with their own neighbors, then the sending station has information two hops away. Each station will be able to determine the connectivity conditions two hops away - just by monitoring simply through slow probing and without reference to gradients at all. This information can be updated at slow or fast probe rates (or anything in between) enabling a station to look forward a few hops in making opportune decisions - where fast probing is utilized this information would be available in almost real time and not averaged as with typical gradients.

This is potentially very valuable, as this information could also be placed in the RTS and CTS information enabling the station sending RTS to make its decision not just on the connectivity conditions between the station and its immediate neighbors, but also on the connectivity conditions it knows exist downstream. In fact, the sending station has almost real-time information of connectivity conditions three hops away ("a hop, skip and jump away", as it knows the conditions between itself and the CTS stations). If certain downstream conditions are known to be better through certain neighbors, these may be more opportune than the neighbor with simply the best immediate connectivity and this can be considered in the relay decision made. So for example, if it is clear that many of the downstream neighbors of one of the immediate neighbors are highly utilized, or many have low power levels, it may be more opportune to instead utilize a different immediate neighbor regardless of the gradients. Three hops away is typically enough insight of what lies ahead as cascading connectivity conditions will change in any event

Accessing this additional diversity is extremely valuable, as the ability to look ahead with knowledge that there are a number of good quality connectivity hops enables better opportune choices to be taken in respect of the paths chosen and increases the probabilities of success.

It should be appreciated that although reference is made to slow and fast probes, the original ODMA concept did not necessarily require the use of gradients. Gradients, together with the described RTS/CTS methodology, provide a disciplined method of probing and eliciting responses from neighbors - as opposed to merely listening and receiving information from a station's neighbors about their neighbors and their neighbors' neighbors. Probing should ultimately also have an adaption mechanism, and not simply be slow or fast. Where connectivity is poor, for example, probing could be slowed down, but when connectivity conditions are good, probing intervals could be reduced so that more probes gather more information which is of value.

The main concept of the gradient is that the efficiency of the network is improved. If a cost function is high, it is less likely to be utilized - which is preferable in the light of the fact that the cost function will probably only be high if the resources are already overloaded or if that route is unreliable. The cost function may be set deliberately high for certain paths or relays to route particular packets preferentially through certain routes (see below). ODMA consequently tends to steer the data through stations that have more capacity and over routes that are more resilient, or over routes that are tailored to a particular need.

In an ODMA network, a station can communicate with infrastructure over a wide variety of modulations, frequencies or other mechanisms, dynamically choosing available channels for transmission opportunistically and adapting the factors to increase the efficiency of the communication. In a relay environment, this ability to operate adaptively over multiple channels frees up network capabilities and available spectrum.

There are many radio protocols presently being used or that are anticipated for future use. In the future, it is envisaged that the usage of a "software-defined radio" will grow in increasing relevance. Software-defined radio systems use software for the modulation and demodulation of radio signals; performing signal processing to produce a radio that is able to communicate on different forms of radio protocol by running appropriate software to implement the modem technologies.

As the many radio protocols emerge and decline in popularity, software-defined radios will be capable of operating on changing radio protocols in real time; flexibly and dynamically. This provides an ideal application for the ODMA technology, where ODMA-enabled software-defined radio stations will be able to communicate over both new and with redundant protocols and utilize or scavenge spectrum non-invasively in licensed and in unlicensed bands, matching a particular modem for a particular task. In order to achieve this, compliance with the rules may be required in respect of the conventional modulation, channels and spectrum usage.

Where a plurality of radios is available, it becomes possible to use any "channels" that may be operating on different frequency bands with radically different propagation conditions. The greater range of opportunities to communicate through differing channels and the greater amount of spectrum available, enables a greater proportion of smaller hops to be utilized, with substantially larger data rates, without affecting the interference conditions of other stations. In an ideal environment, where all channels and spectrum were shared, and not allocated to specific applications as in the present wireless environment, there is infinite flexibility to match opportunities. Upon detection, all the spectrum that may be available at any moment could be optimally utilized based on needs and data could be transported at presently unimaginable rates (due to the defined spectrum allocation restrictions) at very low power levels due to the minimal distances between the stations. While maximizing the throughput, interference is minimized due to the minimal signal strength required.

In the ODMA methodology neighbor gathering is a critical mechanism, and the ability to locate neighbors with diverse, uncorrelated attributes is desirable. However, having too many channels available creates its own complexities as where there are few radio transmitters/receivers available, or where there are too many different channels in operation in the environment, probing may fail to locate neighbors. This will be of particular relevance where the station has to vary the probing channels too often and is not able to provide sufficient time to establish contact with a neighbor.

Consequently, initial probing channels or places to initiate communication should be defined so that neighborhoods can be expanded from at least a base of some connectivity. In this manner, neighbors establishing at least a limited level of communication can be located and then the establishment of more diverse neighbors can be achieved thereafter.

Channels and the numerous wired and radio protocols of communication might be likened to use of different languages; in the sense that communication ability of any network participants will be enhanced if they can converse in more languages. Alternatively, it may be possible to call on a language common to all and then request that replies are heard in another specific language.

Once a neighbor is found on a channel, a group of neighbors can be collected on that channel while still probing on other channels that may still be available for more appropriate neighbors. In this manner, it is possible to maintain one network of connectivity available, while utilizing resources with the objective of locating additional neighbors on other channels for specific purposes. For example, a station could probe on a channel with a large area of coverage, for example on the VHF band at a low data rate, and in the probes the station might even schedule timed synchronized sessions on certain channels where the station indicates to other stations that may be receiving the initial probes (but perhaps the responses are not heard when returned) where they might attempt to meet.

Such circumstances might arise where a subscriber leaves an area of coverage and as a consequence fails to locate any neighbors. Utilizing a band with a wide range, the station could probe to find neighbors. If located, the neighbor station could suggest other channels that might be tried, or the station with reduced connectivity could simply look on other bands to determine whether another or better subset of neighbors is available. This could be determined from propagation conditions or by scanning and probing for neighbors on different channels, even simultaneously on different radios if available to it, or if necessary by changing/switching radios intermittently. In other words, it may be possible on a sophisticated radio system to monitor different channels simultaneously, but if not it will be necessary to allocate a duty cycle to certain channels on the one radio.

Where additional groups of neighbors are collected on different channels, the cost functions may be different over different bands. This may enable the development of a connectivity matrix from which gradients may be generated and from which decisions might be made that are dependent on the communications objectives.

Depending on the wire-line and wireless resources that might be available, a station could generate different families of neighbors for these different purposes. Some of these neighborhoods could be developed simultaneously, for example over wire and wireless, but where wireless environments need to be separated in some manner, the complexity of the problem is increased.

If resources are available in parallel, the increased combinations and permutations available create an infinite number of choices which will lead to over-utilization of resources (flattening batteries) to maintain the groups. In other words, there is a trade-off between the number of choices and the consequential complexity; an infinite number of choices with only a few stations available creates a problem, whereas infinite choices with many stations will result in stations readily locating neighbors. This is the concept of aggregation and congregation.

Where there are multiple resources available, it becomes necessary to decide how to set up the communication structure intelligently; and in order to do this it is essential that stations attempt to maintain connectivity on at least one channel. If there are too many potential means of communicating, the abundance of degrees of freedom complicates communication and it becomes necessary to decide which choices to use or communication will be too resource-dependent in terms of power or time.

For example, a station located in a densely populated area such as in New York may seek a particular station or caliber of neighbor. The station will receive little meaningful assistance by requesting every other station in Manhattan that might be available to respond as this would be overly onerous and resource dependent. In such circumstances, it may instead be preferable to identify a certain caliber of neighbor stations and then request details from such a station, or to request that the identified neighbor station monitors the environment for certain other station(s) requested of the particular type of station. Thereafter, the monitoring station which is the assisting station could be probed on the relevant channel for updates or be asked to report back any successful location of the relevant stations. Alternatively, times could be specified where the stations would communicates on a particular channel. Thereafter the requesting station could probe these reported stations and possibly set up communications as needed.

In the 802.11 environment, for example, the g-channel typically provides a wider range of coverage than the α-channel, so in principle it would typically be better to probe and monitor on the g-channel initially. However, if there is considerable interference, the α-channel may be better in certain circumstances, as the alternative may result in no connectivity at all. So it is obviously necessary for elections and decisions to be made regarding where stations are likely to be attempting communication through probing. Consequently, stations are likely to be probing on the g-channel so new stations seeking neighbors will listen for probes on this channel initially, even if ultimately the α-channel would be more suitable for a particular form of data that needs to be transmitted. If, prior to this, the original stations had made contact on the g-channel and then all moved to the α-channel for some reason, the original stations (knowing that the g-channel is usually the probing channel utilized) may state in intermittent probes sent on the g-channel that communication is taking place in the a-channel so that new stations would know to try there.

Alternatively, a station may choose to listen only in the g-channel, or alternatively only in the α-channel, or listen to both channels simultaneously, or to flip between the channels. If a station can listen to multiple channels simultaneously, then the ability to locate neighbors is considerably enhanced. However, where a station is limited to listening to one channel at a time, or to only a subset of channels, then it may become necessary to allocate time slots and to synchronize channel usage. In other words, stations need to know where to monitor probing; and where nothing is located, a station needs to know where to try in the alternative. Once neighbors are found, it may be possible to continue neighbor gathering and attempt to locate neighbors on other channels, even discarding the original neighbors if appropriate.

By way of example, if there are x sets of neighbors available on x channel options, then if there are x radio transmitter/receiver sets available then the number of neighborhoods located is easy to solve. In such circumstances, probes can be transmitted at full power in order to locate neighbors on all channels. However, where fewer sets of neighbors are available (less than x), it becomes necessary to probe on one channel and listen for responses, and then probe on another and listen for responses there. The problem is that potential neighbors could be missed if the probing takes place in the wrong time slots.

To solve this problem, a station may attempt to probe on a more appropriate channel initially and not move away from the channel until neighbors are located, and it could then coordinate to probe on another channel. However, a new station may probe on this initial channel while stations that have already located each other may have all synchronized with one another to move to the new channel, so the newest station will fail to locate neighbors. A solution to this problem is that the new station might, in addition to the primary channel, listen on other channels as well for relatively short times, listening long enough to hear probes (the interval exceeding typical probe rates). Another solution, as discussed above, is for the new station to remain on the initial channel and that the stations that have moved to another non-standard channel, intermittently report on the initial primary channel where they are now communicating. The obvious problem in these scenarios is that the new station must initially wait to initiate basic connectivity, although if there are a large number of stations available this will not be a problem as the probability of a neighbor being located will be higher.

Another complication may arise where the station on the initial channel experiences very high interference, in which event it is possible that the station may never hear other stations even though they are trying to communicate. Alternatively, the new station may receive the notification of where the stations have formed a neighborhood, but may not have access to the channel or may not be heard on that channel. Consequently, it may still be necessary for such a new station to listen on other channels occasionally; again, the more stations available, the less likely the problem.

In summary, the algorithm may be: probe 90% of the time on an allocated channel with higher coverage (802.11 (g) for example) until probes are received, and 10% on one or more other channels (the a-channel for example) until the station locates a neighbor on either the α-channel or on the g channel. If a station is located on the g-channel, maintain the neighbor and continue to probe on the a-channel (possibly increasing the duty cycle on this channel). If the stations are located on the a-channel and subsequent communication moves to the a-channel, report back to the g-channel intermittently.

Over time, it may be that a group of neighbors in the a-channel is collected and a lonely neighbor on the g-channel is at a sufficient distance that it is not heard on the a-channel. In other words, even though the station on the g-channel knows that it needs to communicate on the a-channel, it is too far away for the responses to be received on that channel. In these circumstances it is necessary for users on the a-channel to intermittently communicate on the g-channel (not only reporting their whereabouts) with a pre-defined duty cycle where windows of time are allocated for communication. If there are several stations that can respond on the g-channel in this manner, the lonely station will need to orchestrate the neighbors by defining synchronized time slots due to the limitations of time available, or it would be possible that several stations would be attempting to communicate simultaneously.

With optimal knowledge, it would be possible to choose the most optimal channels available. With greater diversity of neighbors detected on different channels, together with the information that is made available from these neighbors, it becomes possible to identify and use channels that are better suited to the relevant purpose or needs. Initially, it is necessary to hear another station, or to be heard by another station. As indicated, in order to increase the probability of finding a neighbor a station could attempt a high power transmission on a channel to maximize range to obtain a response, or it could probe at a lower power over multiple channels sequentially or simultaneously; but both mechanisms drain resources. The alternative is to scan channels and wait there long enough to detect other stations. If a probe is heard, the scan can be interrupted and a response sent. If no scan is heard for a time, a probe can be sent by the station. It will be appreciated that where there are many channels and few stations the probability of locating a neighbor is low; and conversely as the number of stations increases relative to the number of channels so the probability increases. To illustrate, five people (stations) trying to communicate in a building with 1,000 rooms (channels) might miss each other indefinitely; but if there are 500 or 1,000 people (stations) the probability of successful communication improves. When located on a poor channel, it is possible for the stations to move to another channel previously scanned where conditions are known to be better (or at least likely to be so given the prior information available). As others find these stations, they will join the cluster opportunistically.

The problem in this scenario is that the clusters may become isolated from other clusters, which may be a problem if communication outside of the group is needed. Therefore, connectivity is needed to increase the cluster size or bridge them in some way. This is best dealt with by stations utilizing or working in combination with multiple radios. Also, as a cluster grows, it may suffer from congestion and interference, in which event dissatisfied stations can probe intermittently on other channels to locate potential neighbors while still maintaining the original group.

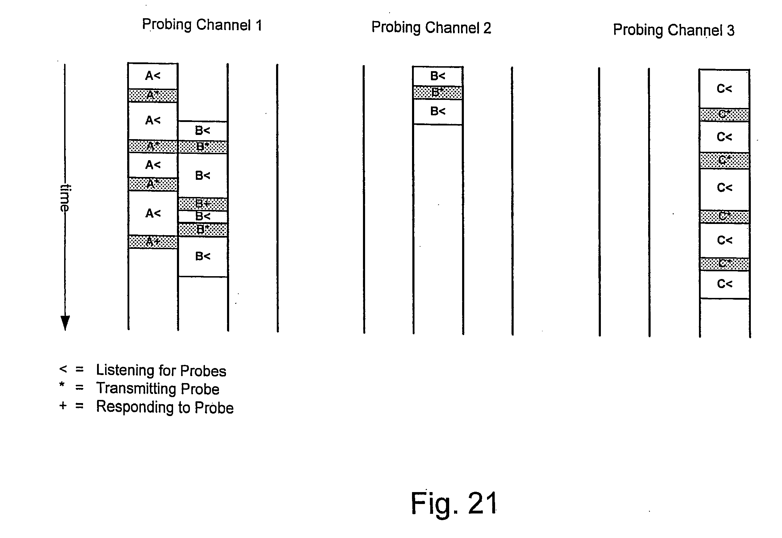

Figure 21 demonstrates an example of a potential probing process, undertaken by three stations (A, B and C) where three probing channels are available (there may be other data channels). In the illustrated example, each station operates on half duplex (can either transmit OR receive at any given time) and begins by listening on channel 1, 2 and 3 respectively. The scanning duration may be randomized as shown, or it could be a predefined interval, but it is far smaller than the listening time thereafter (the drawing is not to scale in this regard). Having received no signals, each station probes and then listens again on the channel. After a time, B elects to scan on channel 1; and after a time both A and B happen to send a probe simultaneously so that the transmissions collide, with neither station registering the other's probe transmission.

Both stations wait for responses and A is the first to retransmit a probe to which B then responds. A is now aware of B and has collected a neighbor; both stations have neighbor table information about the other. As B still needs more than one neighbor, it probes and receives a response from A. In this example, C has continued probing and scanning without success.

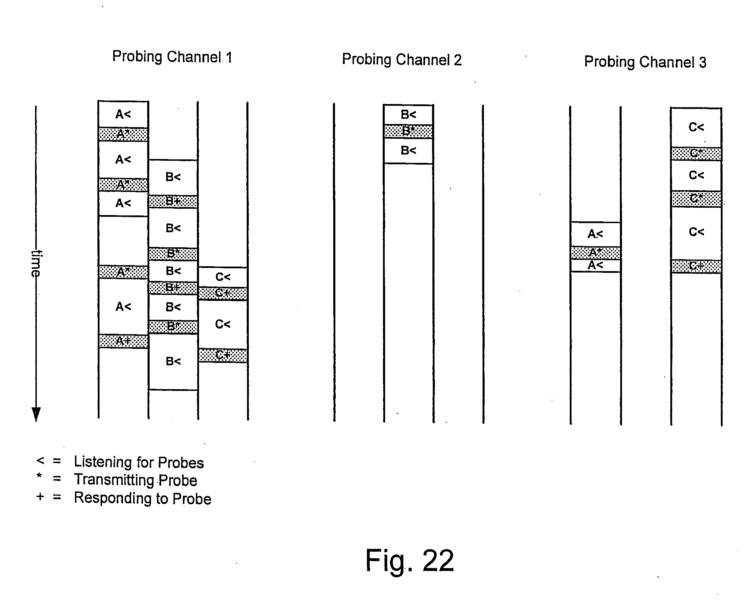

In Figure 22, a second example is provided. Here there was no collision, and B responded to A's probe. However, after detecting B, in this case A scans on channel 3 and after probing also detects C. As C has access to the information in A's neighbor table, it is aware of the additional connectivity available in channel 1, and also has B's information which is included in A's neighbor table. A is also aware of C's status, and can determine that C has no neighbors on channel 3, so A returns to channel 1 where it will ultimately gather C as a neighbor. Prior to this, B probed on channel 1, but received no responses to the probe; instead receiving A's new probe and possibly hearing C's response. B then probes and picks up both A and C as neighbors (therefore by virtue of overhearing C's response to A, or through the direct response received by C in response to its probe, B knows there is no connectivity available on channel 3).

It can be seen from the examples that information from other channels can very quickly become available to stations that are not even probing elsewhere. This enables clusters of stations to group together quickly on certain channels. It will also be evident that if it was clear from the connectivity conditions detected between A and C on channel 3 that the connectivity on channel 3 was very good relative to channel 1, the stations could choose to move to channel 3 which is more optimal than channel 1. It should also be evident that while A and B were in the process of communicating on channel 1, had there been other stations available (possibly on other channels), C may have moved to another channel (channel 2 or 4), in which event A would not have been successful in bringing C to channel 1 in the Figure 22 example, and the groups might have become fragmented.

In order to provide the best opportunity to locate stations, a station should listen for at least one full inter-probe duration period (for example the probe may take 1ms and the next may occur 100ms later). As mentioned, a station can simply scan and not probe, and then move on to another channel and listen there, but it should scan for a sufficient period to be sure it has an opportunity to detect possible probes. As additional stations accumulate on a channel, the more likely it is that a scan on the channel will provide access to probing (and all the information associated with the probes), so the time needed to scan for probes is reduced, enabling the monitoring of more channels in a given duty cycle. In this manner, stations can identify the channels that are less costly in terms of cost function and resource utilization, and progress to less cluttered and more suitable channels.

In other words, a station might initially scan on the band most likely to locate neighbors (for example VHF provides great range, with 100km being possible for each hop, but less throughput potential than 802.11 bands), so it scans the VHF band first. Recognizing that there are many stations and good connectivity available, the station might progress to a better band (802.11 may offer less range but improved throughput of x 100 improvement over VHF) and continue in this manner over the channels available to it until it locates a suitable band and neighborhood.

If the connectivity on VHF had been poor, the station might have gathered some neighbors there and then attempted to look elsewhere while maintaining at least some connectivity, even if not optimal for the station's needs. This process applies intelligence to the searching process, as different neighbors are treated differently and preferentially. If there are many 802.11 stations it may well be better to avoid VHF neighbors, even if available, leaving the VHF band available for longer range hops that may be needed by other stations and using a number of smaller, low power, high throughput hops to achieve the objective.

The methodologies discussed above can be modified by stations depending on the circumstances. If it is clear that many stations exist on a particular channel, for example, a neighborhood that has gathered on a new channel will need to communicate on the initial channel very rarely, if at all as any new stations will quickly make contact.

Obviously, if there are multiple channels available, a station can probe and listen simultaneously on all of these channels. Alternatively, certain of the units could be joined together with a wired connection (or another auxiliary connection) to create "combination stations". Each of the stations forming such a combination station can probe on its own channels while maintaining the connectivity with the wired neighbors; and consequently with the neighbors collected by the other wired station(s).

Since the wired connection provides a very high speed connection, the combination station acts as one unit with two or more radios and is able to gather two or more sets of neighbors on different channels simultaneously. The stations wired to each other form a neighborhood of wired "Ethernet" stations which can be chosen opportunistically (using the gradients constructed) as relaying stations to the specific neighborhoods formed in the channels. This benefits all the sets of stations, by allowing the messages passing through stations of one channel to access the other channels (via ODMA over Ethernet), then hop through the stations on these other channels, and then return to their own channel (via ODMA over Ethernet through an appropriate combination station). As such, these combinations or stations with multiple radios can serve as bridges or links to separated groups.

For example, stations on the network may have some or no overlap in the channels available (some stations operate on (A) 802.11a, others on (B) 802.11b, others on (C) 802.11 g, others on (D) 802.11a/g and others on (E) 802.11 a/b/g. This form of problem will always occur to some extent as new units and technologies are made available.

Obviously paths through units of the form A-D-A, or A-E-A are possible. Also, A -E-B-B-E-A is possible, etc. However, joining an A unit with a C unit with a wire connection, enables A - A/C-E-C-C-D-C- C/A - A; or a B unit to an E unit enables the B unit to communicate with other B units over the a/g channels etc. Interspersing some wired stations also creates some diversity, although it should be noted that the gradients defined are not channel dependent.

Where there are two probing channels, if one is noisy, the other can be utilized. The disadvantage is that neighborhoods may become fragmented which reduces the connectivity potential. On the other hand, spreading over multiple probing channels reduces congestion, resulting in a perpetual tradeoff between time and resources, cost, quality of services and routing.

The number of channels monitored should be significantly less than the number of stations probing for neighbors to ensure neighbors will be located. Even if a number of stations are well connected to each other, but a new station is badly connected, it will be difficult to locate. In these circumstances, a station should attempt to locate neighbors at least on the poor communication channel so those neighbors can assist with their better connected neighbors.

Where poorly connected, it is desirable to minimize the number of hops so stations will communicate at the highest transmission power levels and at lowest data rates. It must be remembered that where propagation conditions are good, interference will also propagate more efficiently so it becomes necessary to find gaps in the interference even in these channels providing higher coverage.

If a larger number of hops is envisaged, then the probability of finding someone on a channel will be improved if there are many neighbors of relatively low connectivity rather than only a few neighbors with high connectivity. This is because the number of choices is defined by the number of neighbors available and the manner in which channels are defined affects the neighbors that can be collected. Depending on the network objectives, the probability of any message getting through the network becomes dependent upon the rules defined. If the objective is for everyone to get through, the rules will tend towards overall network optimization; if the resources and time constraints for each user are relatively low, more channels are available to the network for probing and data transmission. The aim is to maintain enough stations to keep the probability of success high, while balancing the efficiencies required in not maintaining too many neighbors.

In ODMA, each station becomes a part of the infrastructure and it is the robust nature of the network that is important rather than needs of one particular the station. Consequently, stations are required to have a relatively low duty cycle, utilizing resources at perhaps 10%, while being available to others 90% of the time. Consequently, probabilities of options and choices are high and message transmissions successfully traversing multiple hops will be close to 100%. Depending on these network design parameters, the number of neighbors necessary to be maintained can be determined. Channels, noise, traffic, interference, etc, become less relevant where there are many neighbors available due to the diversity that is available. The metric can be set depending on the quality of service level required, which is ultimately the core component of communication theory. Where there is great diversity of neighbors, the probability of each neighbor duplicating neighbors with other stations becomes lower, so each station is actually very well connected despite the low number of neighbors maintained. Radio propagation assists in this diversity, as neighbors do not have to be in geographical proximity necessarily. Provided there are multiple uncorrelated choices available a message with have a high probability of being transmitted successfully.

As a real world example, consider a few trucks travelling in convoy (each having 802.11 and VHF bands available. As they are all relatively close, they are able to gather the others as neighbors in certain 802.11 bands. Even though they have formed a cluster, all the stations might intermittently probe on VHF, enabling long distance communications with other trucks and perhaps their base. As there is significant propagation diversity in VHF, a particular location may provide optimal range for certain trucks compared with others even though they are located close to one another (using 100mW transmissions at one location, as opposed to 1W at another). Rather than all stations gathering each other locally on both VHF and 802.11, it may be preferable for the other trucks to send information over 802.11 (using 5mW transmissions, for example) to the well placed truck and enable it to bridge or link the transmissions to the destination. As the trucks move, another truck may find itself in a preferable position and it will now be used, thereby minimizing transmission power requirements and opportunistically finding neighbors hundreds of kilometers away on VHF through the station, over two hops.

While it is important to detect interference and find paths through the interference, in certain circumstances it becomes necessary to detect the presence of other external wireless conditions. Dynamic frequency selection (DFS) is a mechanism that dynamically detects signals from other systems and avoids co-channel operation with those systems. This is of particular relevance in systems that must be protected against interference, notably radar systems which may utilize certain bands that would normally be available to 802.11.

Where a prohibited channel is detected, or where a channel is utilizing a signal that must be avoided (such as where radar is detected), a station must stop transmitting on that channel. One way of detecting radar or other prohibited signals is to position certain stations at high sites, which can then communicate to the others which channels are prohibited for use. This is not dissimilar in principle to a station picking up channels of high interference.

Once the prohibited channels have been identified, the "master" station could orchestrate to neighboring stations the channel usage to avoid the channel, interference or radar etc, by using dynamic frequency selection. In a multi-hop relay system, in such circumstances the network should coordinate the probing channel so that listening stations will know where to transmit the probes and responses. This could be broadcast intermittently, akin to a beacon station, with certificated authority to ensure the compliance from the "slave" stations hearing the broadcast. If necessary, stations receiving the broadcast could themselves broadcast the message on to other stations in their area.

If an ordinary station detects radar, it will be prohibited from transmitting on the relevant channel itself; which creates a problem as the station will be forced to do nothing and remain quiet. To solve this problem, another secondary probing channel could be defined, on which code, frequency and time slots could be available for supplementary communications. Where more than one beacon station is heard, stations may elect to join one set of probing channels rather than another; however, this will tend to lead to data flowing through that group of neighbors, segregating groups and reducing connectivity, unless the other channels can also be maintained as neighbors. There is much flexibility, with the options available having advantages and disadvantages depending on the cost, coverage and capacity trade-off.

The ability to locate potential neighbors and to form neighborhoods becomes more complicated where many channels are available, and this problem will become even more complicated with the increasing utilization of software-defined radios. Ultimately, the mechanisms employed to locate the initial neighbors most successfully and establish some level of communication is a form of game theory that will become less complicated with increasing numbers of stations available. However, although it becomes more difficult to locate neighbors, it is also harder to be blocked from interference and impacted by poor connectivity as neighbor tables will communicate interference conditions on other channels and the connectivity conditions.

## Claims

1. A method of operating a communication network comprising a plurality of stations each able to transmit and receive data so that the network can transmit a message comprising a plurality of data packets from an.originating station (S;C) to a destination station (D) via at least one opportunistically selected intermediate station (S1,S2;1, 2,3a, 3b,3c), the method including:
selecting, at each station, one or more probing channels for the transmission of probe signals to other stations;
transmitting neighbor gathering probe signals from each station on the selected one or more probing channels, other neighboring stations which receive the neighbor gathering probe signals from a probing station responding directly, or indirectly via other stations, to thereby indicate to the probing station their availability as destination or intermediate stations;
transmitting on one or more of the selected probing channels, from a station with data to send, to other neighboring stations that have indicated to the probing station their availability as destination or intermediate stations, a data transport signal comprising a Request to Send message RTS indicating the need to send data to a particular destination station or stations and specifying instructions and/or criteria for use by one or more neighboring stations receiving the Request to Send message;
transmitting, from one or more neighboring stations that have indicated to the probing station their availability as destination or intermediate stations and that receive the Request to Send message, to the station with data to send, a data transport signal comprising a first response message including general information that indicates said neighboring station's availability as a destination or intermediate station and supplementary information in response to the instructions and/or criteria specified by the station with data to send; and
selecting opportunistically, at the station with data to send, one or more neighboring stations that transmitted a first response message as recipients of data and/or instructions based on the general information and, where applicable, on the supplementary information in their first response messages, and transmitting at least one data packet to said one or more selected neighboring stations or sending one or more additional instructions to said one or more selected neighboring stations and/or to other stations, the method being **characterized** that said general information includes connectivity information relating to the quality of connectivity between Stations.

2. A method according to claim 1 including, subsequent to the station with data to send sending said data or instructions to said one or more selected neighboring stations, transmitting on one or more of the selected probing channels or on a data channel, from one or more neighboring stations that have received the data or instructions from the station with data to send, a data transport signal comprising a second response message to the station with data to send, the second response message including supplementary information, and wherein the supplementary information provided in each second response message may be used by the station with data to send in the selection of one or more selected stations to transmit further data or instructions to.

3. A method according to claim 1 or 2 wherein the supplementary information includes cost to destination information for the specified destination station (D) or stations, and/or resource information of the station sending the data transport signal or of any other neighboring stations, and/or supplementary cost function information comprising data from at least one of a plurality of categories of supplementary cost functions.

4. A method according to claim 3 wherein the supplementary cost function information and resource information comprises information in respect of one or more of the following categories of cost functions:
a) message/transmission priority;
b) message time to live;
c) amount of data to be transferred;
d) information relating to the availability and utilization of the resources of the station sending a Clear to Send CTS message, including the buffer size indicating the extent to which messages are retained or queued and waiting to be sent, etc, the time duration relating to how long data has already been held in the buffer, potential limits of buffer in respect of size, capacity and ability to transmit data to reduce the buffer, data rates used and/or potentially available through the station;
e) channels available and/or any channels prohibited;
f) path characteristics, including one or more of path loss, multi-path distortion including phase and/or frequency distortion, bit error rates, packet failure rates, success rates/numbers of packets received, success rates in receiving and sending messages including RTS/CTS ratios and transmit to Acknowledgement ACK ratios, and interference conditions including background noise and/or noise floor, on different channels;
g) battery usage and/or capacity at the station transmitting the Clear to Send message;
h) duty cycle of the station transmitting the Clear to Send message;
i) average delays in messages getting to any destinations;
j) ping round trip delays to different destinations and neighbors;
k) information enabling the assessment of the aggregate quality of connectivity available;
l) neighboring station information relative to the station sending the Clear to Send message, including the number of neighbors available and the quality of the neighbors, availability and utilization of the resources of these neighbors, and data rates being used and/or potentially available through them; and
m) the state of the connectivity with the neighbors of the neighbors of the station sending the Clear to Send message, and the next levels of neighbors beyond, and/or the resources used or available at these stations.

5. A method according to any one of claims 1 to 4 wherein the Request to Send messages specify additional instructions and/or define specified criteria to be provided in the Clear to Send messages transmitted by responding stations, or define specified criteria required for Clear to Send messages to be transmitted.

6. A method according to any one of claims 1 to 5 wherein the Request to Send messages include instructions for other neighboring stations that do not meet the criteria specified in the Request to Send message.

7. A method according to any one of claims 1 to 6 wherein the data transport signals include additional instructions and/or define criteria for use by neighboring stations of a station receiving said data transport signals.

8. A method according to any one of claims 1 to 6 wherein the Request to Send messages include general information and/or supplementary information about the station with data to send and/or about its neighboring stations.

9. A method according to any one of claims 1 to 8 wherein the Clear to Send messages specify additional instructions and/or define specified criteria for use by the station with data to send and/or by neighboring stations of the station with data to send.

10. A method according to any one of claims 1 to 9 including applying a weighting or formula selectively to different cost functions or categories of cost function, or criteria or resources to which a cost function is allocated, depending on one or more characteristics of message data to be sent from the originating station to the destination station.

11. A method according to any one of claims 1 to 10 including defining a plurality of different gradient types and generating cost to destination gradients from originating stations to destination stations comprising one or more of such different gradient types, and identifying certain characteristics of data packets, so that data packets of different sizes or characteristics can selectively follow different gradient types and thus different paths in the network from originating stations to destination stations.

12. A method according to any one of claims 1 to 11 including selecting, at one or more stations, a plurality of different probing channels for the transmission of probe signals to other stations, transmitting neighbor gathering probe signals on the plurality of different probing channels, and acquiring respective groups of neighbor stations on one or more of the different probing channels.

13. A method according to any one of claims 1 to 12 wherein a plurality of stations are interconnected via an auxiliary communication link, the method including one or more of the plurality of stations selecting at least one different probing channel for the transmission of probe signals to other stations, transmitting neighbour gathering probe signals on the at least one different probing channel and said one or more stations transmitting such neighbor gathering probe signals acquiring a group of neighbor stations on the respective different probing channels, thereby effectively to create a larger group of neighbor stations available to each of the interconnected stations.

14. A method according to any one of claims 1 to 13 wherein information in the Request to Send and/or Clear to Send messages is used to determine peaks of opportunity in connectivity and/or troughs of interference in connectivity for use in opportunistically selecting said one or more neighboring stations as recipients of data and/or instructions.

15. A communication network comprising a plurality of stations each able to transmit and receive data so that the network can transmit a message comprising a plurality of data packets from an originating station (S;O) to a destination station (D) via at least one opportunistically selected intermediate station (S1,S2;1,2,3a,3b,3c), the network being operable to:
select, at each station, one or more probing channels for the transmission of probe signals to other stations;
transmit neighbor gathering probe signals from each station on the selected one or more probing channels, other neighboring stations which receive the neighbor gathering probe signals from a probing station responding directly, or indirectly via other stations, to thereby indicate to the probing station their availability as destination or intermediate stations;
transmit on one or more of the selected probing channels, from a station with data to send, to other neighboring stations that have indicated to the probing station their availability as destination or intermediate stations, a data transport signal comprising a Request to Send message RTS indicating the need to send data to a particular destination station or stations and specifying instructions and/or criteria for use by one or more neighboring stations receiving the Request to Send message;
transmit, from one or more neighboring stations that have indicated to the probing station their availability as destination or intermediate stations and that receive the Request to Send message, to the station with data to send, a data transport signal comprising a first response message including general information
indicates said neighboring station's availability as a destination or intermediate station and supplementary information in response to the instructions and/or criteria specified by the station with data to send; and
select opportunistically, at the station with data to send, one or more neighboring stations that transmitted a first response message as recipients of data and/or instructions based on the general information and, where applicable, on the supplementary information in their first response messages, and transmit at least one data packet to said one or more selected neighboring stations or send one or more additional instructions to said one or more selected neighboring stations and/or to other stations , the communication network being **characterized** that said general information includes connectivity information relating to the quality of connectivity between stations.

## Patentansprüche

1. Verfahren zum Betreiben eines Kommunikationsnetzwerkes, welches eine Mehrzahl an Stationen umfasst, welche jeweils zum Übermitteln und Empfangen von Daten imstande sind, so dass das Netzwerk eine Nachricht, welche eine Mehrzahl an Datenpaketen umfasst, von einer Ausgangsstation (S; C) über wenigstens eine opportunistisch ausgewählte Zwischenstation (S1, S2; 1, 2, 3a, 3b, 3c) an eine Zielstation (D) zu übermitteln vermag, wobei das Verfahren die folgenden Schritte umfasst:
- Auswählen eines oder mehrerer Testkanäle an jeder Station zum Übermitteln von Testsignalen an andere Stationen;
- Übermitteln von Nachbarerfassungs-Testsignalen von einer jeden Station auf dem ausgewählten oder mehreren Testkanälen, wobei andere Nachbarstationen, welche die Nachbarerfassungs-Testsignale von einer Teststation empfangen, direkt oder indirekt über andere Stationen antworten, um der Teststation hierdurch ihre Verfügbarkeit als Ziel- oder Zwischenstationen anzuzeigen;
- Übermitteln eines Datentransportsignals, welches eine Sendeanforderungsnachricht (RTS, Request-To-Send) umfasst, welche den Bedarf an einem Versenden von Daten an eine bestimmte Zielstation oder -stationen sowie vorgegebene Anweisungen und/oder Kriterien zur Verwendung durch eine oder mehrere Nachbarstationen, welche die Sendeanforderungsnachricht empfangen, anzeigt, auf einem oder mehreren der ausgewählten Testkanäle von einer Station mit zu versendenden Daten an andere Nachbarstationen, welche der Teststation ihre Verfügbarkeit als Ziel- oder Zwischenstation angezeigt haben;
- Übermitteln eines Datentransportsignals von einer oder mehreren Nachbarstationen, welche der Teststation ihre Verfügbarkeit als Ziel- oder Zwischenstation angezeigt haben und welche die Sendeanforderungsnachricht empfangen, an die Station mit zu versendenden Daten, wobei das Datentransportsignal eine erste Antwortnachricht umfasst, die allgemeine Informationen, welche die Verfügbarkeit dieser Nachbarstation als Ziel- oder Zwischenstation anzeigen, sowie zusätzliche Informationen als Antwort auf die Anweisungen und/oder Kriterien, welche durch die Station mit zu versendenden Daten vorgegeben sind, enthält; und
- Opportunistisches Auswählen von einer oder mehreren Nachbarstationen, welche eine erste Antwortnachricht als Empfänger von Daten und/oder von Anweisungen auf Basis der allgemeinen Informationen und, soweit verwendbar, der zusätzlichen Informationen in ihren ersten Antwortnachrichten übermittelt haben, an der Station mit zu versendenden Daten, sowie Übermitteln von wenigstens einem Datenpaket an diese eine oder mehreren ausgewählten Nachbarstationen oder Übersenden von einer oder mehrerer zusätzlicher Anweisungen an diese eine oder mehrere ausgewählte Nachbarstationen und/oder an andere Stationen;
wobei das Verfahren **dadurch gekennzeichnet ist, dass** die allgemeinen Informationen Konnektivitätsinformationen enthalten, welche sich auf die Qualität der Konnektivität zwischen der Stationen beziehen.

2. Verfahren nach Anspruch 1, umfassend, im Anschluss an die Station mit zu versendenden Daten, das Übersenden dieser Daten oder Anweisungen an die eine oder mehreren ausgewählten Nachbarstationen, das Übermitteln eines Datentransportsignals von einer oder mehreren Nachbarstationen, welche die Daten oder Anweisungen von der Station mit zu versendenden Daten empfangen haben, auf einem oder mehreren der ausgewählten Testkanäle oder auf einem Datenkanal, wobei das Datentransportsignal eine zweite Antwortnachricht an die Station mit zu versendenden Daten umfasst, wobei die zweite Antwortnachricht zusätzliche Informationen enthält und wobei die zusätzlichen Informationen, welche in jeder zweiten Antwortnachricht bereitgestellt sind, von der Station mit zu versendenden Daten bei der Auswahl von einer oder mehreren ausgewählten Stationen genutzt werden können, um an diese weitere Daten oder Anweisungen zu übermitteln.

3. Verfahren nach Anspruch 1 oder 2, wobei die zusätzlichen Informationen Zielkosteninformationen für die vorgegebene(n) Zielstation (D) oder -stationen und/oder Ressourceninformationen der Station, welche das Datentransportsignal übersendet, oder einer beliebigen anderen Nachbarstation und/oder zusätzliche Kostenfunktionsinformationen, welche Daten von wenigstens einer einer Mehrzahl an Kategorien von zusätzlichen Kostenfunktionen umfassen, enthalten.

4. Verfahren nach Anspruch 3, wobei die zusätzlichen Kostenfunktionsinformationen und Ressourceinformationen Informationen in Bezug auf eine oder mehrere der nachfolgenden Kategorien oder Kostenfunktionen umfassen:
(a) Nachrichten-/Übermittlungspriorität;
(b) TTL-Nachrichten (Time-To-Live);
(c) Menge an zu übermittelnden Daten;
(d) Informationen in Bezug auf die Verfügbarkeit und die Nutzung der Ressourcen der Station, welche eine Sendeerlaubnisnachricht (CTS, Clear-To-Send) übersendet, einschließlich der Puffergröße, welche den Umfang anzeigt, in welchem Nachrichten zurückgehalten werden oder anstehen und auf ihre Versendung warten etc., der Zeitdauer in Bezug darauf, wie lange Daten bereits in dem Puffer zurückgehalten worden sind, potentiellen Grenzen des Puffers hinsichtlich seiner Größe, Kapazität und Fähigkeit zur Übermittlung von Daten, um den Puffer zu verringern, sowie verwendeter Datenraten und/oder durch die Station potentiell verfügbarer Datenraten;
(e) verfügbare Kanäle und/oder sämtliche gesperrten Kanäle;
(f) Pfadcharakteristika einschließlich eines oder mehrerer Pfadverluste, Mehrpfadverzerrung einschließlich Phasen- und/oder Frequenzverzerrung, Bitfehlerraten, Paketausfallraten, Erfolgsraten/Anzahl an empfangenen Paketen, Erfolgsraten hinsichtlich des Empfangens und Übersendens von Nachrichten einschließlich RTS/CTS-Raten und ACK-Raten (Transmit-To-Acknowledgement) sowie Störungsbedingungen einschließlich Hintergrundgeräuschen und Grundrauschen auf verschiedenen Kanälen;
(g) Batterienutzung und/oder -kapazität an der Station, welche die Sendeerlaubnisnachricht übermittelt;
(h) Einschaltdauer der der Station, welche die Sendeerlaubnisnachricht übermittelt;
(i) durchschnittliche Verzögerung von Nachrichten, welche an sämtliche Ziele gelangen;
(j) Ping-Laufzeitverzögerungen an verschiedene Ziele und Nachbarn;
(k) Informationen, welche die Bewertung der Aggregatqualität der verfügbaren Konnektivität ermöglichen;
(l) Nachbarstationsinformationen bezüglich der Station, welche die Sendeerlaubnisnachricht übermittelt, einschließlich der Anzahl an verfügbaren Nachbarn und der Qualität der Nachbarn, der Verfügbarkeit und der Nutzung der Ressourcen dieser Nachbarn sowie der verwendeten Datenraten und/oder der durch diese potentiell verfügbaren Datenraten; und
(m) Status der Konnektivität mit den Nachbarn der Nachbarn der Station, welche die Sendeerlaubnisnachricht übermittelt, sowie mit den nächsten Ebenen von Nachbarn darüber hinaus, und/oder der genutzten oder an diesen Stationen verfügbaren Ressourcen.

5. Verfahren nach einem der Ansprüche 1 bis 4, wobei die Sendeanforderungsnachrichten zusätzliche Anweisungen vorgeben und/oder vorgegebene Kriterien definieren, welche in den von den antwortenden Stationen übermittelten Sendeerlaubnisnachrichten bereitgestellt sein sollen, oder vorgegebene Kriterien definieren, welche für zu übermittelnde Sendeerlaubnisnachrichten erforderlich sind.

6. Verfahren nach einem der Ansprüche 1 bis 5, wobei die Sendeanforderungsnachrichten Anweisungen für andere Nachbarstationen enthalten, welche nicht den Kriterien genügen, wie sie in der Sendeanforderungsnachricht vorgegeben sind.

7. Verfahren nach einem der Ansprüche 1 bis 6, wobei die Datentransportsignale zusätzliche Anweisungen enthalten und/oder Kriterien definieren, welche zur Verwendung durch Nachbarstationen einer Station vorgesehen sind, welche dieses Datentransportsignal empfängt.

8. Verfahren nach einem der Ansprüche 1 bis 7, wobei die Sendeanforderungsnachrichten allgemeine Informationen und/oder zusätzliche Informationen über die Station mit zu versendenden Daten und/oder über deren Nachbarstationen enthalten.

9. Verfahren nach einem der Ansprüche 1 bis 8, wobei die Sendeerlaubnisnachrichten zusätzliche Anweisungen vorgeben und/oder vorgegebene Kriterien definieren, welche zur Verwendung durch die Station mit zu versendenden Daten und/oder durch Nachbarstationen der Station mit zu versendenden Daten vorgesehen sind.

10. Verfahren nach einem der Ansprüche 1 bis 9, umfassend das Anwenden einer Gewichtung oder einer Formel wahlweise auf verschiedene Kostenfunktionen oder Kategorien von Kostenfunktionen oder auf Kriterien oder Ressourcen, welchen-eine Kostenfunktion zugewiesen ist, in Abhängigkeit von einem oder mehreren Charakteristika von Nachrichtendaten, welche von der Ausgangsstation an die Zielstation übermittelt werden sollen.

11. Verfahren nach einem der Ansprüche 1 bis 10, umfassend das Definieren einer Mehrzahl an verschiedenen Gradiententypen und das Erzeugen von Kosten-zum-Ziel-Gradienten von Ausgangsstationen zu Zielstationen, welche einen oder mehrere solcher verschiedener Gradiententypen aufweisen, sowie das Identifizieren von bestimmten Charakteristika von Datenpaketen, so dass Datenpakete mit unterschiedlicher Größe oder unterschiedlichen Charakteristika selektiv unterschiedlichen Gradiententypen und folglich verschiedenen Pfaden in dem Netzwerk von den Ausgangsstationen zu den Zielstationen zu folgen vermögen.

12. Verfahren nach einem der Ansprüche 1 bis 11, umfassend das Auswählen einer Mehrzahl an verschiedenen Testkanälen für die Übermittlung von Testsignalen an andere Stationen, das Übermitteln von Nachbarerfassungs-Testsignalen auf der Mehrzahl an verschiedenen Testkanälen sowie das Akquirieren entsprechender Gruppen von Nachbarstationen auf einem oder auf mehreren der verschiedenen Testkanäle an einer oder an mehreren Stationen.

13. Verfahren nach einem der Ansprüche 1 bis 12, wobei eine Mehrzahl an Stationen über eine Hilfskommunikationsverbindung miteinander verbunden sind, wobei das Verfahren an einer oder mehreren der verschiedenen Stationen umfasst: das Auswählen von wenigstens einem verschiedenen Testkanal zur Übermittlung von Testsignalen an andere Stationen, das Übermitteln von Nachbarerfassungs-Testsignalen auf dem wenigstens einen verschiedenen Testkanal, wobei die eine oder mehreren Stationen solche Nachbarerfassungs-Testsignale übermitteln, sowie das Akquirieren einer Gruppe von Nachbarstationen auf den entsprechenden verschiedenen Testkanälen, um hierdurch in wirksamer Weise eine größere Gruppe von Nachbarstationen zu erzeugen, welche für jede der miteinander verbundenen Stationen verfügbar sind.

14. Verfahren nach einem der Ansprüche 1 bis 13, wobei Informationen in den Sendeanforderungsnachrichten und/oder in den Sendeerlaubnisnachrichten zur Ermittlung von Spitzen (Peaks) der Möglichkeit einer Konnektivität und/oder von Tiefpunkten einer Störung der Konnektivität verwendet werden, welche zur Verwendung bei der opportunistischen Auswahl von einer oder mehrerer Nachbarstationen als Empfänger von Daten und/oder Anweisungen vorgesehen sind.

15. Kommunikationsnetzwerk, welches eine Mehrzahl an Stationen umfasst, welche jeweils zum Übermitteln und Empfangen von Daten imstande sind, so dass das Netzwerk eine Nachricht, welche eine Mehrzahl an Datenpaketen umfasst, von einer Ausgangsstation (S; C) über wenigstens eine opportunistisch ausgewählte Zwischenstation (S1, S2; 1, 2, 3a, 3b, 3c) an eine Zielstation (D) zu übermitteln vermag, wobei das Netzwerk betriebsfähig ist zum:
- Auswählen eines oder mehrerer Testkanäle an jeder Station zum Übermitteln von Testsignalen an andere Stationen;
- Übermitteln von Nachbarerfassungs-Testsignalen von einer jeden Station auf dem ausgewählten oder mehreren Testkanälen, wobei andere Nachbarstationen, welche die Nachbarerfassungs-Testsignale von einer Teststation empfangen, direkt oder indirekt über andere Stationen antworten, um der Teststation hierdurch ihre Verfügbarkeit als Ziel- oder Zwischenstationen anzuzeigen;
- Übermitteln eines Datentransportsignals, welches eine Sendeanforderungsnachricht (RTS, Request-To-Send) umfasst, welche den Bedarf an einem Versenden von Daten an eine bestimmte Zielstation oder -stationen sowie vorgegebene Anweisungen und/oder Kriterien zur Verwendung durch eine oder mehrere Nachbarstationen, welche die Sendeanforderungsnachricht empfangen, anzeigt, auf einem oder mehreren der ausgewählten Testkanäle von einer Station mit zu versendenden Daten an andere Nachbarstationen, welche der Teststation ihre Verfügbarkeit als Ziel- oder Zwischenstation angezeigt haben;
- Übermitteln eines Datentransportsignals von einer oder mehreren Nachbarstationen, welche der Teststation ihre Verfügbarkeit als Ziel- oder Zwischenstation angezeigt haben und welche die Sendeanforderungsnachricht empfangen, an die Station mit zu versendenden Daten, wobei das Datentransportsignal eine erste Antwortnachricht umfasst, die allgemeine Informationen, welche die Verfügbarkeit dieser Nachbarstation als Ziel- oder Zwischenstation anzeigen, sowie zusätzliche Informationen als Antwort auf die Anweisungen und/oder Kriterien, welche durch die Station mit zu versendenden Daten vorgegeben sind, enthält; und
- Opportunistischen Auswählen von einer oder mehreren Nachbarstationen, welche eine erste Antwortnachricht als Empfänger von Daten und/oder von Anweisungen auf Basis der allgemeinen Informationen und, soweit verwendbar, der zusätzlichen Informationen in ihren ersten Antwortnachrichten übermittelt haben, an der Station mit zu versendenden Daten, sowie Übermitteln von wenigstens einem Datenpaket an diese eine oder mehreren ausgewählten Nachbarstationen oder Übersenden von einer oder mehrerer zusätzlicher Anweisungen an diese eine oder mehrere ausgewählte Nachbarstationen und/oder an andere Stationen;
wobei das Kommunikationsnetzwerk **dadurch gekennzeichnet ist, dass** die allgemeinen Informationen Konnektivitätsinformationen enthalten, welche sich auf die Qualität der Konnektivität zwischen der Stationen beziehen.

## Revendications

1. Procédé d'exploitation d'un réseau de communication qui comprend une pluralité de stations, chacune capable de transmettre et de recevoir des données de telle sorte que le réseau puisse transmettre un message qui comprend une pluralité de paquets de données en provenance d'une station d'origine (S ; O) vers une station de destination (D) par l'intermédiaire d'une station intermédiaire au moins sélectionnée de manière opportuniste (S1, S2 ; 1, 2, 3a, 3b, 3c), le procédé comprenant les étapes consistant à :
sélectionner, au niveau de chaque station, un ou plusieurs canaux de vérification pour la transmission de signaux de vérification vers d'autres stations ;
transmettre des signaux de vérification de regroupement de voisinage en provenance de chaque station sur le ou les canaux de vérification sélectionnés, les autres stations voisines qui reçoivent les signaux de vérification de regroupement de voisinage en provenance d'une station de vérification répondant directement, ou indirectement par l'intermédiaire d'autres stations, afin d'indiquer de ce fait à la station de vérification leur disponibilité en tant que stations de destination ou intermédiaires ;
transmettre sur le ou les canaux de vérification sélectionnés, en provenance d'une station qui a des données à envoyer, vers d'autres stations voisines qui ont indiqué à la station de vérification leur disponibilité en tant que stations de destination ou intermédiaires, un signal de transport de données comprenant un message « Demande d'émettre » RTS qui indique la nécessité d'envoyer des données à une station ou à des stations de destination particulières et qui spécifie des instructions et / ou des critères destinés à être utilisés par une ou plusieurs stations voisines qui reçoivent le message « Demande d'émettre » ;
transmettre, en provenance d'une ou de plusieurs stations voisines qui ont indiqué à la station de vérification leur disponibilité en tant que stations de destination ou intermédiaires et qui reçoivent le message « Demande d'émettre », vers la station qui a des données à envoyer, un signal de transport de données qui comprend un premier message de réponse qui contient des informations générales qui indiquent la disponibilité de ladite station voisine en tant que station de destination ou intermédiaire et des informations supplémentaires en réponse aux instructions et / ou aux critères spécifiés par la station qui a des données à envoyer ; et
sélectionner de manière opportuniste, au niveau de la station qui a des données à envoyer, une ou plusieurs stations voisines qui ont transmis un premier message de réponse en tant que destinataires des données et / ou des instructions sur la base des informations générales et, s'il y a lieu, sur la base des informations supplémentaires dans leurs premiers messages de réponse, et transmettre au moins un paquet de données vers ladite ou vers lesdites stations voisines sélectionnées ou envoyer une ou plusieurs instructions supplémentaires vers ladite ou vers lesdites stations voisines sélectionnées et / ou vers d'autres stations, le procédé étant **caractérisée en ce que** lesdites informations générales contiennent des informations de connectivité en rapport à la qualité de la connectivité entre les stations.

2. Procédé selon la revendication 1, comprenant, après l'étape où la station qui a des données à envoyer envoie des données ou des instructions vers ladite ou vers lesdites stations voisines sélectionnées, une étape consistant à transmettre sur un ou plusieurs des canaux de vérification sélectionnés ou sur un canal de données, en provenance d'une ou de plusieurs stations voisines qui ont reçu les données ou les instructions en provenance de la station qui a des données à envoyer, un signal de transport de données qui comprend un deuxième message de réponse vers la station qui a des données à envoyer, le deuxième message de réponse contenant des informations supplémentaires, et dans lequel les informations supplémentaires fournies dans chaque deuxième message de réponse peuvent être utilisées par la station qui a des données à envoyer pour sélectionner une ou de plusieurs stations sélectionnées de manière auxquelles d'autres données ou instructions.

3. Procédé selon la revendication 1 ou la revendication 2, dans lequel les informations supplémentaires contiennent des informations de coût à la destination pour la station ou les stations de destination spécifiée (D), et / ou des informations de ressource de la station qui envoie le signal de transport de données ou de toutes les autres stations voisines, et / ou des informations de fonctions de coût supplémentaires qui comprennent des données provenant de l'une au moins d'une pluralité de catégories de fonctions de coût supplémentaires.

4. Procédé selon la revendication 3, dans lequel les informations de fonctions de coût supplémentaires et les informations de ressource comprennent des informations qui concernent une ou plusieurs des catégories de fonctions de coût suivantes :
a) une priorité de message / de transmission ;
b) une durée de vie du message ;
c) une quantité de données à transférer ;
d) des informations en rapport à la disponibilité et à l'utilisation des ressources de la station qui envoie un message « Prêt à émettre » CTS, y compris la taille de la mémoire tampon qui indique dans quelle mesure les messages sont retenus ou mis attente et attendent d'être envoyés, etc., la durée de temps en rapport au temps depuis lequel les données se trouvent déjà dans le tampon, les limites potentielles du tampon en ce qui concerne la taille, la capacité et l'aptitude à transmettre des données de manière à réduire la mémoire tampon, les débits de données utilisés et / ou potentiellement disponibles dans la station ;
e) les canaux disponible et / ou tous les canaux interdits ;
f) les caractéristiques du chemin, y compris une ou plusieurs des caractéristiques suivantes : affaiblissement de chemin, distorsion par trajets multiples, y compris une distorsion de phase et / ou de fréquence, taux d'erreurs sur les bits, taux de défaillance sur les paquets, taux de succès / nombres de paquets reçus, taux de succès de réception et d'envoi de messages y compris les rapports RTS / CTS et les rapports transmission à « Accusé de réception » ACK, et les conditions d'interférence, y compris le bruit de fond et / ou le bruit de fond plancher, sur différents canaux ;
g) utilisation et / ou capacité de la batterie au niveau de la station qui transmet le message « Prêt à émettre » ;
h) coefficient d'utilisation de la station qui transmet le message « Prêt à émettre » ;
i) retards moyens de réception des messages vers n'importe quelles destination ;
j) établissement des retards allers-retours vers différents destinations et voisins ;
k) informations validant l'évaluation de la qualité globale de la connectivité disponible ;
l) informations de station voisine qui se rapportent à la station qui envoie le message « Prêt à émettre », y compris le nombre de voisins disponibles et la qualité des voisins, la disponibilité et l'utilisation des ressources de ces voisins, et les débits de données utilisés et / ou potentiellement disponible à travers eux ; et
m) l'état de la connectivité avec les voisins des voisins de la station qui envoie le message « Prêt à émettre », et les niveaux suivants des voisins qui se trouvent au-delà, et / ou les ressources utilisées ou disponibles au niveau de ces stations.

5. Procédé selon l'une quelconque des revendications 1 à 4, dans lequel les messages « Demande d'émettre » spécifient des instructions supplémentaires et / ou définissent les critères spécifiés à fournir dans les messages « Prêt à émettre » transmis par les stations qui répondent, ou définissent les critères spécifiés requis pour que les messages « Prêt à émettre » soient transmis.

6. Procédé selon l'une quelconque des revendications 1 à 5, dans lequel les messages « Demande d'émettre » comprennent des instructions pour les autres stations voisines qui ne répondent pas aux critères spécifiés dans le message « Demande d'émettre ».

7. Procédé selon l'une quelconque des revendications 1 à 6, dans lequel les signaux de transport de données comprennent des instructions supplémentaires et / ou définissent des critères destinés à être utilisés par des stations voisines d'une station qui reçoit lesdits signaux de transport de données.

8. Procédé selon l'une quelconque des revendications 1 à 6, dans lequel les messages « Demande d'émettre » comprennent des informations générales et / ou des informations supplémentaires qui concernent la station qui a des données à envoyer et / ou qui concernent ses stations voisines.

9. Procédé selon l'une quelconque des revendications 1 à 8, dans lequel les messages « Prêt à émettre » spécifient des instructions supplémentaires et / ou définissent des critères spécifiés destinés à être utilisés par la station qui a des données à envoyer et / ou par les stations voisines de la station qui a des données à envoyer.

10. Procédé selon l'une quelconque des revendications 1 à 9, comprenant une étape consistant à appliquer une pondération ou une formule de manière sélective à différentes fonctions de coût ou catégories de fonctions de coût, ou à des critères ou à des ressources auxquels une fonction de coût est attribuée, selon une ou plusieurs caractéristiques de données de message à envoyer depuis la station d'origine vers la station de destination.

11. Procédé selon l'une quelconque des revendications 1 à 10, comprenant les étapes consistant à définir une pluralité de différents types de gradient et à générer des gradients de coût à la destination à partir des stations d'origine vers les stations de destination comprenant un ou plusieurs tels différents types de gradient, et à identifier certaines caractéristiques des paquets de données, de telle sorte que des paquets de données de différentes tailles ou caractéristiques puissent suivre de manière sélective différents types de gradient et ainsi différents chemins dans le réseau à partir des stations d'origine vers les stations de destination.

12. Procédé selon l'une quelconque des revendications 1 à 11, comprenant les étapes consistant à sélectionner, au niveau d'une ou deux plusieurs stations, une pluralité de canaux de vérification différents pour la transmission des signaux de vérification vers d'autres stations, transmettre les signaux de vérification de regroupement de voisinage sur la pluralité de canaux de vérification différents, et acquérir les groupes respectifs de stations voisines sur un ou plusieurs des canaux de vérification différents.

13. Procédé selon l'une quelconque des revendications 1 à 12, dans lequel une pluralité de stations sont interconnectées par l'intermédiaire d'une liaison de communication auxiliaire, le procédé comprenant : une ou plusieurs de la pluralité de stations sélectionnent au moins un canal de vérification différent pour la transmission des signaux de vérification vers d'autres stations, transmettent des signaux de vérification de regroupement de voisinage sur le ou les canaux de vérification différents et ladite ou lesdites stations transmettent de tels signaux de vérification de regroupement de voisinage en acquérant un groupe de stations voisines sur les canaux de vérification différents respectifs, afin de créer effectivement de ce fait un groupe plus grand de stations voisines disponibles auprès de chacune des stations interconnectées.

14. Procédé selon l'une quelconque des revendications 1 à 13, dans lequel les informations présentes dans les messages « Demande d'émettre » et / ou « Prêt à émettre » sont utilisées de manière à déterminer des pics d'occasion dans la connectivité et / ou des creux d'interférences dans la connectivité à utiliser dans l'étape consistant à sélectionner de manière opportuniste ladite ou lesdites stations voisines en tant que destinataires des données et / ou des instructions.

15. Réseau de communication qui comprend une pluralité de stations, chacune d'elles étant capable de transmettre et de recevoir des données de telle sorte que le réseau puisse transmettre un message qui comprend une pluralité de paquets de données en provenance d'une station d'origine (S ; O) vers une station de destination (D) par l'intermédiaire d'une station intermédiaire au moins sélectionnée de manière opportuniste (S1, S2 ; 1, 2, 3a, 3b, 3c), le réseau pouvant être exploité de manière à :
sélectionner, au niveau de chaque station, un ou plusieurs canaux de vérification pour la transmission de signaux de vérification vers d'autres stations ;
transmettre des signaux de vérification de regroupement de voisinage en provenance de chaque station sur le ou les canaux de vérification sélectionnés, vers les autres stations voisines qui reçoivent les signaux de vérification de regroupement de voisinage en provenance d'une station de vérification répondant directement, ou indirectement par l'intermédiaire d'autres stations, afin d' indiquer de ce fait à la station de vérification leur disponibilité en tant que stations de destination ou intermédiaires ;
transmettre sur le ou les canaux de vérification sélectionnés, en provenance d'une station qui a des données à envoyer, vers d'autres stations voisines qui ont indiqué à la station de vérification leur disponibilité en tant que stations de destination ou intermédiaires, un signal de transport de données comprenant un message « Demande d'émettre » RTS qui indique la nécessité d'envoyer des données vers une station ou vers des stations de destination particulières et qui spécifie des instructions et / ou des critères destinés à être utilisés par une ou plusieurs stations voisines qui reçoivent le message « Demande d'émettre » ;
transmettre, en provenance d'une ou de plusieurs stations voisines qui ont indiqué à la station de vérification leur disponibilité en tant que stations de destination ou intermédiaires et qui reçoivent le message « Demande d'émettre », vers la station qui a des données à envoyer, un signal de transport de données qui comprend un premier message de réponse qui contient des informations générales qui indiquent la disponibilité de ladite station voisine en tant que station de destination ou intermédiaire et des informations supplémentaires en réponse aux instructions et / ou aux critères spécifiés par la station qui a des données à envoyer ; et
sélectionner de manière opportuniste, au niveau de la station qui a des données à envoyer, une ou plusieurs stations voisines qui ont transmis un premier message de réponse en tant que destinataires des données et / ou des instructions sur la base des informations générales et, s'il y a lieu, sur la base des informations supplémentaires dans leurs premiers messages de réponse, et transmettre au moins un paquet de données vers ladite ou vers lesdites stations voisines sélectionnées ou envoyer une ou plusieurs instructions supplémentaires vers ladite ou vers lesdites stations voisines sélectionnées et / ou vers d'autres stations, le réseau étant **caractérisée en ce que** lesdites informations générales contiennent des informations de connectivité en rapport à la qualité de la connectivité entre les stations.
